# EUROPÄISCHE PATENTSCHRIFT

(11) **EP 3 784 944 B1**
(45) Veröffentlichungstag und Bekanntmachung des Hinweises auf die Patenterteilung: **08.06.2022**
(21) Anmeldenummer: 19720493.6
(22) Anmeldetag: 17.04.2019
(51) Int. Cl.: F16L 27/11, F16L 33/30, F16L 51/02, B29C 45/00, B60R 16/00, F16K 15/14, F16K 15/16, F16L 21/03, F16L 29/00

(54) **FLUIDVERBINDUNGSADAPTER, FLUIDVERBINDUNGSANORDNUNG SOWIE VERFAHREN ZUM HERSTELLEN EINES FLUIDVERBINDUNGSADAPTERS**
FLUID CONNECTION ADAPTER, FLUID CONNECTION ASSEMBLY AND METHOD FOR PRODUCING A FLUID CONNECTION ADAPTER
ADAPTATEUR DE RACCORD DE FLUIDE, DISPOSITIF DE RACCORD DE FLUIDE AINSI QUE PROCÉDÉ DE FABRICATION D'UN ADAPTATEUR DE RACCORD DE FLUIDE

(30) Priorität: 23.04.2018 DE 102018206233; 27.07.2018 DE 102018212593
(43) Veröffentlichungstag der Anmeldung: 03.03.2021
(73) Patentinhaber: aft automotive GmbH, 48268 Greven-Reckenfeld (DE)
(72) Erfinder: KRAMER, Dirk, 48329 Havixbeck (DE); MAY, Thomas, 48565 Steinfurt (DE)
(74) Vertreter: Dietz, Christopher Friedrich
(86) Internationale Anmeldenummer: PCT/EP2019/059960
(87) Internationale Veröffentlichungsnummer: WO 2019/206770

(56) Entgegenhaltungen:
- WO-A1-2016/120859
- DE-A1- 4 308 367
- DE-C1- 4 039 054
- FR-A1- 2 777 972
- US-A1- 2013 146 170
- US-A1- 2016 074 089

## Beschreibung

Die Erfindung betrifft einen Fluidverbindungsadapter, eine Fluidverbindungsanordnung sowie ein Verfahren zum Herstellen eines Fluidverbindungsadapters.

Ein Fluidverbindungsadapter gemäß dem Oberbegriff des Anspruchs 1 ist aus der US 2016/0074089 bekannt.

Aus dem Stand der Technik ist beispielsweise die Druckschrift DE 40 39 054 C1 bekannt. Diese betrifft eine Schlauch-Rohr-Verbindung, bei der das Rohr nahe seinem Ende mit wenigstens einer Halterippe versehen und der Schlauch mit einem Endabschnitt über die Halterippe hinweg auf das Rohr aufgeschoben und mittels einer den Schlauch hinter der Halterippe umgebenden Schelle oder dergleichen festgeklemmt ist. Dabei ist vorgesehen, dass zwischen dem Schlauch und dem Rohr wenigstens in dem zwischen der Halterippe und der Schelle liegenden Bereich ein Dichtungsmaterial angeordnet ist, das seine Dichtfähigkeit in einem Temperaturbereich von wenigstens -40 °C bis +140 °C beibehält. Auf diese Weise ergibt sich auch bei sehr niedrigen, unter dem Gefrierpunkt liegenden Temperaturen von bis zu -40 °C eine hohe Dichtigkeit bei hohem Fluiddruck im Schlauch und Rohr.

Ein Verfahren zum Herstellen der Verbindung besteht darin, dass das Dichtungsmaterial in zähflüssigem Zustand in Form einer das Rohr zwischen Halterippe und Klemmbereich der Schelle umgebenden Materialanhäufung wenigstens bis zur radialen Höhe der Halterippe in der Nähe der Halterippe aufgetragen und der Schlauch vor dem Aushärten des Dichtungsmaterials über die Halterippe und das Dichtungsmaterial hinweg auf das Rohr geschoben wird. Dies erleichtert das Aufschieben des Schlauchs auf das Rohr und einen Ausgleich von Oberflächenrauigkeiten des Rohrs.

Es ist Aufgabe der Erfindung, einen Fluidverbindungsadapter vorzuschlagen, welcher gegenüber bekannten Fluidverbindungsadaptern Vorteile aufweist, insbesondere auf besonders flexible und einfache Art und Weise eine fluidtechnische Verbindung einer Rohrleitung mit einer Schlauchtülle ermöglicht.

Dies wird erfindungsgemäß mit einem Fluidverbindungsadapter mit den Merkmalen des Anspruchs 1 erreicht. Der Fluidverbindungsadapter ist zur fluidtechnischen Verbindung der Rohrleitung mit der Schlauchtülle vorgesehen und ausgebildet. Er weist zur fluidtechnischen Verbindung der Rohrleitung mit der Schlauchtülle einen starren Anschlussstutzen zur Kopplung mit der Rohrleitung sowie eine in einem flexiblen Schlauchtüllenaufnahmeelement ausgebildete Schlauchtüllenaufnahme zur Aufnahme der Schlauchtülle auf.

Als Leitungen zur fluidtechnischen Anbindung einer fluidführenden Einrichtung kommen grundsätzlich Schlauchleitungen und Rohrleitungen infrage. Eine Schlauchleitung hat den Vorteil, dass sie flexibler ist als eine Rohrleitung und entsprechend Relativbewegungen besser ausgleichen kann. Aufgrund ihrer Elastizität lässt sie sich leicht verbauen. Außerdem ermöglicht sie einen gewissen Toleranzausgleich. Zudem ist eine akustische Entkopplung mittels der Schlauchleitung möglich. Insbesondere im Kraftfahrzeugbereich besteht die Schlauchleitung jedoch aus kostenintensiven Materialien beziehungsweise Werkstoffen, beispielsweise um eine bestimmte Beständigkeit gegenüber einem Medium sicherzustellen. Bevorzugt weist die Schlauchleitung einen mehrlagigen Aufbau auf, der beispielsweise in der DIN73411 beschrieben ist.

Zudem erfordert es die Bauraumsituation in dem Kraftfahrzeug häufig, dass die Schlauchleitung als Formschlauch vorliegt, welcher zur Herstellung aufwändiger Werkzeuge bedarf. Bereits bei kleinsten Änderungen an der Leitungsführung der Schlauchleitung sind neue Teile aus neuen Werkzeugen erforderlich. Ein Formschlauch lässt sich im Nachhinein nicht verformen und ist nur für die vorbestimmte Geometrie verwendbar. Der Formschlauch ist also formstabil. Ein Baukastensystem aus einer Vielzahl von Formschläuchen lässt sich nur unter Inkaufnahme zusätzlicher Verbindungsstellen in der Leitungsführung verwirklichen. Eine derartige Ausgestaltung mit zusätzlichen Verbindungsstellen ist jedoch teuer und beeinflusst neben der Zuverlässigkeit und den Toleranzen auch den Druckverlust in der Schlauchleitung beziehungsweise dem Formschlauch negativ.

Die Rohrleitung unterscheidet sich von der Schlauchleitung insbesondere hinsichtlich der Steifigkeit, welche wesentlich von den Eigenschaften des jeweiligen Werkstoffs abhängt. Beispielsweise besteht die Rohrleitung aus einem Werkstoff mit einem höheren Elastizitätsmodul und/oder Schubmodul als die Schlauchleitung. Zur ökonomischen Ausbildung eines Leitungssystems, insbesondere mit hoher Variantenvielfalt, ist es daher sinnvoll, bevorzugt eine Rohrleitung beziehungsweise mehrere Rohrleitungen anstelle einer Schlauchleitung beziehungsweise mehrerer Schlauchleitungen einzusetzen. Die Rohrleitung liegt beispielsweise als extrudierte Rohrleitung, vorzugsweise aus Kunststoff, vor. Diese lässt sich durch geeignete Verfahren in verschiedenen Längen und verschiedenen Leitungsverläufen sehr ökonomisch darstellen. Die Rohrleitung lässt sich zudem durch geeignete Schichtaufbauten an die jeweiligen Medien und Temperaturansatzbereiche anpassen. Wenigstens ein Bereich der Rohrleitung, in welchem eine höhere Biege- und/oder Längenelastizität erforderlich ist, kann zum Beispiel als Wellrohrbereich ausgestaltet werden.

Die vorstehend erwähnte Schlauchtülle ist zur fluidtechnischen Verbindung mit einer Schlauchleitung vorgesehen und ausgebildet. Die Schlauchtülle ist beispielsweise Bestandteil einer fluidführenden Einrichtung, insbesondere einer wasserführenden Einrichtung. Bevorzugt ist die fluidführende Einrichtung Bestandteil eines Kraftfahrzeugs, insbesondere eines Kühlmittelkreislaufs des Kraftfahrzeugs. Sie kann jedoch auch Teil einer Filterspüleinrichtung zur Spülung eines Filters, insbesondere eines Kohlenwasserstofffilters, einer Bremsanlage, insbesondere einer Unterdruckanlage der Bremsanlage, einer Kurbelgehäuseentlüftungseinrichtung, einer Kraftstoffanlage oder einer Reduktionsmitteleinrichtung zur Einbringung von Reduktionsmittel in Abgas sein. Sie kann jedoch auch im Rahmen eines Haushaltsgeräts, einer Wasserinstallation eines Gebäudes oder einer Industrieanlage Anwendung finden.

Die Verbindung der Schlauchleitung mit der Schlauchtülle kann beispielsweise unmittelbar durch Überschieben der Schlauchleitung mit leichter Aufweitung über die Schlauchtülle und nachfolgender Sicherung der Schlauchleitung an der Schlauchtülle mittels einer Schlauchschelle erfolgen. Die Schlauchtülle ist beispielsweise nach DIN 74304 ausgeführt oder alternativ gemäß einer Betriebsnorm eines Kraftfahrzeugherstellers. In diesen Normen sind Kontur, Haupt- und Vorzugsmaße und Oberflächenanordnungen für die Schlauchtülle geregelt. Weil die Schlauchleitung innen vorzugsweise eine dauerelastische glatte Innenumfangsfläche aufweist, ist die Dichtheit der fluidtechnischen Verbindung der Schlauchleitung mit der Schlauchtülle unmittelbar gewährleistet.

Die Verbindung zwischen der Schlauchleitung und der Schlauchtülle wird zur Sicherstellung einer ausreichenden Überdruckfestigkeit gegen Abrutschen mit der Schlauchschelle gesichert. Die Schlauchschelle kann beispielsweise ausgeführt sein als Schraubschelle nach DIN 3017 oder als Federbandschelle nach DIN 3021. Die Schlauchschelle kann auch nach einer Betriebsnorm des Kraftfahrzeugherstellers ausgeführt sein. Grundsätzlich ist die Ausgestaltung der Schlauchschelle jedoch beliebig. Zumeist kommt jedoch eine federnde Spannschelle zum Einsatz.

Für eine fluidtechnische Verbindung der Rohrleitung mit der fluidführenden Einrichtung muss eine geeignete einfache Lösung gefunden werden. Zu unterscheiden sind hier Verbindungen, die nicht lösbar ausgestaltet sind und im Anlieferungszustand des Leitungssystems bereits realisiert beziehungsweise hergestellt sind, und Verbindungen, die erst nach der Anlieferung des Leitungssystems montiert werden, insbesondere manuell montiert werden, und - vorzugsweise - auch manuell servicefähig sind. Die nichtlösbare Verbindung kann durch eine Montage der Rohrleitung auf einem Anschlussstutzen mit einer sogenannten Tannenbaumkontur realisiert werden. An der Tannenbaumkontur kann wenigstens ein elastisches Dichtelement vorliegen, beispielsweise ein O-Ring. Die Verbindungen werden üblicherweise durch ein sogenanntes Aufschlagen hergestellt, nämlich mittels spezifischer Einrichtungen.

Als manuell montierbare beziehungsweise servicefähige Leitungsverbindung bietet sich eine Schnellkupplung an. Eine derartige Schnellkupplung ist bewährter Stand der Technik. So gibt es sogenannte V-Kupplungen, Kupplungen gemäß SAE-Norm, insbesondere nach SAE J2044, und Kupplungen nach VDA, insbesondere für größere Durchmesser und/oder für Kühlkreislaufanwendungen. Die Rohrleitung kann nach wie vor mittels Aufschlagen auf einen entsprechend ausgestalteten Anschlussstutzen der Schnellkupplung mit dieser verbunden sein. Dabei muss die Rohrleitung jedoch bestimmte Eigenschaften aufweisen, insbesondere entsprechende Anforderungen an Dehnbarkeit, Kriechfestigkeit und dergleichen erfüllen. Auch stoffschlüssige Verbindungen wie Kunststoffschweißen, zum Beispiel Rotationsreibschweißen oder Laserschweißen, oder Kleben, wie zum Beispiel in der Druckschrift DE 103 36 494 A1 beschrieben, sind umsetzbar.

In jedem Fall ist zur fluidtechnischen Verbindung der fluidführenden Einrichtung mit der Schlauchleitung also eine Schlauchtülle und zur fluidtechnischen Verbindung mit der Rohrleitung ein Anschlussstutzen notwendig. Das bedeutet schlussendlich, dass die fluidführende Einrichtung auf die Verwendung der Schlauchleitung oder der Rohrleitung angepasst werden muss und das jeweilige Verbindungselement, also entweder die Schlauchtülle oder der Anschlussstutzen, an ihr ausgebildet sein muss, um die Schlauchleitung oder die Rohrleitung fluidtechnisch mit ihr verbinden zu können. Um anstelle der Schlauchleitung eine Rohrleitungen mit der fluidführenden Einrichtung verwenden zu können, könnte also die Schlauchtülle durch einen entsprechenden Anschlussstutzen ausgetauscht werden. Dies ist jedoch für langjährig bewährte Standardbauteile, beispielsweise Leitungsthermostate, elektrische Wasserpumpen oder dergleichen, nicht ohne weiteres möglich.

Auch eine Modifizierung der fluidführenden Einrichtung für den Einsatz einer Schnellkupplung ist nicht ohne weiteres möglich. Hinzu kommt, dass hierbei entstehende Werkzeugkosten enorm sein können, weil Toleranzanforderungen für eine solche Schnellkupplung hoch sind und gegebenenfalls zusätzliche Schieberebenen erforderlich sind. Zudem entsteht eine weitere Bauteilvariante. Des Weiteren verursachen Schnellkupplungen höhere Kosten als eine Schlauchschelle und es muss Bauraum für eine Betätigung und Montage der Schnellkupplung zur Verfügung stehen.

Ein direktes Aufschieben der Rohrleitung auf die Schlauchtülle und ihre Sicherung mit einer Schlauchschelle ist in der Regel ebenfalls nicht sinnvoll realisierbar. Die Schlauchtülle ist auf die Verwendung einer Schlauchleitung und mithin auf das Vorliegen von Elastomerwerkstoffen abgestimmt. Für das Aufbringen der Rohrleitung auf die Schlauchtülle müsste zum einen die Rohrleitung gedehnt werden. Hierbei sind selbst bei elastischen Rohrleitungen enorme Kräfte erforderlich, sodass eine Handmontage und/oder -demontage nahezu unmöglich ist. Außerdem müsste die Rohrleitung derart elastisch sein, dass sie sich an den Außenumfang der Schlauchtülle anschmiegt, also auch nach dem Überlaufen einer an der Schlauchtülle vorgesehenen Wulst, einer sogenannten Olive. Des Weiteren müsste die Rohrleitung an ihrer Innenumfangsfläche über eine große Dichtfläche mit endlicher Oberflächengüte bei geringen Flächenpressungen zuverlässig abdichten und dauerhaft dicht bleiben. Dies ist ohne eine Innenschicht aus Elastomer kaum möglich und im Falle einer Wiedermontage der Rohrleitung auf der Schlauchtülle, bei der in der Regel bleibende Verformungen der Rohrleitung in einer anderen Lage positioniert werden, nahezu ausgeschlossen. Schließlich muss die Rohrleitung dem dauerhaften lokal begrenzten Anpressdruck einer Rohrschelle gewachsen sein.

Es könnte nun beispielsweise vorgesehen sein, die Rohrleitung über einen Adapter mit einer Schlauchleitung zu verbinden und diese wiederum an der Schlauchtülle zu befestigen, nämlich auf bekannte Art und Weise mittels einer Schlauchschelle. Eine solche Lösung ist jedoch sehr aufwendig, weist mehrere Schnittstellen mit Undichtigkeitsrisiko auf und benötigt zudem viel Bauraum. Aus diesem Grund ist der Fluidverbindungsadapter derart ausgestaltet, dass er einerseits unmittelbar mit der Rohrleitung und andererseits unmittelbar mit der Schlauchtülle verbunden oder zumindest verbindbar ist, sodass über den Fluidverbindungsadapter eine direkte fluidtechnische Verbindung zwischen der Rohrleitung und der Schlauchtülle hergestellt beziehungsweise herstellbar ist.

Hierzu verfügt der Fluidverbindungsadapter über den Anschlussstutzen und die Schlauchtüllenaufnahme. Der Anschlussstutzen dient zur Kopplung mit der Rohrleitung und die Schlauchtüllenaufnahme zur Aufnahme der Schlauchtülle. Die Schlauchtüllenaufnahme ist in dem Schlauchtüllenaufnahmeelement ausgebildet, wird also von diesem wenigstens bereichsweise begrenzt, insbesondere in radialer Richtung bezüglich einer Längsmittelachse des Schlauchtüllenaufnahmeelements und oder des Fluidverbindungsadapters. Bevorzugt umgreift das Schlauchtüllenaufnahmeelement die Schlauchtüllenaufnahme in Umfangsrichtung durchgehend.

Der Anschlussstutzen ist zur fluidtechnischen Verbindung der Rohrleitung mit dem Fluidverbindungsadapter vorgesehen und ausgebildet. Analog hierzu ist die Schlauchtüllenaufnahme zur fluidtechnischen Verbindung der Schlauchtülle mit dem Fluidverbindungsadapter vorgesehen und ausgebildet. Um den unterschiedlichen Eigenschaften der Rohrleitung und der Schlauchtülle gerecht zu werden, ist der Anschlussstutzen starr ausgebildet, wohingegen das Schlauchtüllenaufnahmeelement, in welchem die Schlauchtüllenaufnahme ausgebildet ist, flexibel ist. Das bedeutet, dass der Anschlussstutzen eine höhere Steifigkeit aufweist als das Schlauchtüllenaufnahmeelement, insbesondere aus einem Material besteht, welches einen höheren Elastizitätsmodul und/oder Schubmodul aufweist. Der Anschlussstutzen und das Schlauchtüllenaufnahmeelement sind vorzugsweise einstückig miteinander ausgebildet, also besonders bevorzugt stoffschlüssig miteinander verbunden. Insbesondere sind der Anschlussstutzen und das Schlauchtüllenaufnahmeelement fest und unlösbar miteinander verbunden, sodass ein zerstörungsfreies Trennen des Anschlussstutzens von dem Schlauchtüllenaufnahmeelement nicht möglich und auch nicht vorgesehen ist.

Eine bevorzugte Weiterbildung der Erfindung sieht vor, dass der Anschlussstutzen als Rohrtülle ausgestaltet ist und wenigstens einen Ringvorsprung zum Befestigen der Rohrleitung aufweist. Zur Herstellung der fluidtechnischen Verbindung des Fluidverbindungsadapters mit der Rohrleitung ist die Rohrtülle vorgesehen und ausgebildet. Die Rohrtülle verfügt über den wenigstens einen Ringvorsprung, welcher der Befestigung der Rohrleitung an der Rohrtülle dient. Der Ringvorsprung ist vorzugsweise derart ausgestaltet, dass er entgegen einer Aufschubrichtung der Rohrleitung auf die Rohrtülle eine Auflaufschräge aufweist und insoweit schräg und - vorzugsweise - kontinuierlich ansteigt, sodass das Aufschieben der Rohrleitung auf die Rohrtülle vereinfacht. Anschließend an die Auflaufschräge tritt der Ringvorsprung vorzugsweise senkrecht bezüglich einer Längsmittelachse des Anschlussstutzens beziehungsweise der Rohrtülle in radialer Richtung nach innen zurück, sodass ein Tannenbaumprofil ausgebildet oder zumindest teilweise ausgebildet ist.

Die Schlauchtülle weist analog zu dem als Rohrtülle ausgebildeten Anschlussstutzen vorzugsweise ebenfalls einen Ringvorsprung auf. Der Ringvorsprung der Schlauchtülle ist jedoch nach Art einer Olive ausgebildet und weist insoweit im Längsschnitt bezüglich einer Längsmittelachse der Schlauchtülle gesehen eine durchgehend gekrümmte Außenkontur auf. Im Längshalbschnitt gesehen ist die Olive insoweit zumindest näherungsweise wie eine Halbellipse ausgebildet. Die Ausgestaltung des Anschlussstutzens als Rohrtülle und das Vorsehen des wenigstens einen Ringvorsprungs ermöglicht eine zuverlässige und dauerhafte Anbindung der Rohrleitung an den Fluidverbindungsadapter.

Eine weitere Ausgestaltung der Erfindung sieht vor, dass an dem Anschlussstutzen wenigstens eine Dichtung zur fluiddichten Kopplung mit der Rohrleitung angeordnet ist. Beispielsweise verfügt der Anschlussstutzen über eine Dichtungsaufnahme, in welcher die Dichtung vorliegt. Die Dichtungsaufnahme ist vorzugsweise in Umfangsrichtung durchgehend ausgebildet, umgreift also die Längsmittelachse des Anschlussstutzens in Umfangsrichtung durchgehend. Die Dichtungsaufnahme ist besonders bevorzugt kanalartig ausgebildet und wird insoweit in radialer Richtung nach innen von einem vorzugsweise vollständig oder zumindest bereichsweise planen Grund und in axialer Richtung beiderseits von jeweils einer Seitenwand begrenzt, wobei die Seitenwände jeweils senkrecht auf dem Grund stehen. Beispielsweise wird eine der Seitenwände von dem vorstehend beschriebenen Ringvorsprung gebildet. Die Dichtung liegt insbesondere in Form eines Dichtrings, beispielsweise eine O-Rings, vor. Mittels der Dichtung wird eine dauerhafte und zuverlässige dichte fluidtechnische Verbindung zwischen der Rohrleitung und dem Fluidverbindungsadapter sichergestellt.

Eine Weiterbildung der Erfindung sieht vor, dass eine die Schlauchtüllenaufnahme begrenzende Wand des Schlauchtüllenaufnahmeelements auf Seiten der Schlauchtüllenaufnahme profiliert ist. Die Wand begrenzt die Schlauchtüllenaufnahme vorzugsweise in radialer Richtung nach außen bezüglich der Längsmittelachse des Schlauchtüllenaufnahmeelements beziehungsweise der Schlauchtüllenaufnahme. Die profilierte Ausgestaltung der Wand wird beispielsweise durch Ausbildung wenigstens einer Halteaufnahme realisiert, welche in Form einer Ausnehmung in der Wand ausgebildet ist. Die Halteaufnahme dient der Aufnahme wenigstens eines Haltevorsprungs der Schlauchtülle, beispielsweise der vorstehend bereits erwähnten Olive. Es kann jedoch auch vorgesehen sein, dass mehrere Halteaufnahmen in der Wand ausgebildet sind, nämlich in axialer Richtung beabstandet voneinander.

Vorzugsweise weist bei einer derartigen Ausgestaltung der Schlauchtüllenaufnahme beziehungsweise des Schlauchtüllenaufnahmeelements die Schlauchtülle eine Anzahl an Haltevorsprüngen auf, die der Anzahl der Halteaufnahmen entspricht. Beispielsweise liegen insoweit mehrere in axialer Richtung voneinander beabstandete Oliven an der Schlauchtülle vor. Eine solche Schlauchtülle liegt beispielsweise an einem Schnellverbinder vor, insbesondere an einem Schnellverbinder mit Metallgehäuse. Die beschriebene Ausgestaltung des Schlauchtüllenaufnahmeelements beziehungsweise seiner Wand und/oder der Schlauchtülle ermöglicht eine in axialer Richtung besonders stabile und zuverlässige Verbindung zwischen dem Fluidverbindungsadapter und der Schlauchtülle.

Eine bevorzugte Weiterbildung der Erfindung sieht vor, dass der Anschlussstutzen aus einem ersten Material und das Schlauchtüllenaufnahmeelement aus einem von dem ersten Material verschiedenen zweiten Material besteht. Der Anschlussstutzen und das Schlauchtüllenaufnahmeelement sind insoweit materialuneinheitlich ausgestaltet. Insbesondere ist das erste Material derart gewählt, dass der Anschlussstutzen besonders zuverlässig und dicht mit der Rohrleitung verbindbar ist. Analog hierzu ist das zweite Material vorzugsweise derart gewählt, dass die Schlauchtülle besonders zuverlässig und dauerhaft dicht in der von dem Schlauchtüllenaufnahmeelement ausgebildeten Schlauchtüllenaufnahme aufgenommen ist, sodass insgesamt eine zuverlässige und dichte fluidtechnische Verbindung zwischen der Rohrleitung und der Schlauchtülle über den Fluidverbindungsadapter hergestellt ist.

Eine weitere Ausführungsform der Erfindung sieht vor, dass das zweite Material eine größere Flexibilität aufweist als das erste Material. In anderen Worten weist das zweite Material beispielsweise einen kleineren Elastizitätsmodul und/oder einen kleineren Schubmodul auf als das erste Material. Eine derartige Ausgestaltung des Fluidverbindungsadapters ermöglicht eine besonders gute Anpassung an die Rohrleitung einerseits sowie die Schlauchtülle andererseits. Während der Anschlussstutzen zur fluidtechnischen Verbindung mit der Rohrleitung starr ist und insoweit eine höhere Steifigkeit aufweist als das Schlauchtüllenaufnahmeelement, ist das Schlauchtüllenaufnahmeelement flexibler ausgebildet, sodass es nach Art einer Schlauchleitung mit der Schlauchtülle verbindbar ist. Hierdurch wird eine dauerhaft fluiddichte Verbindung hergestellt.

Zusätzlich oder alternativ kann vorgesehen sein, dass das erste Material ein Elastomer und das zweite Material ein Thermoplast oder ein Duroplast ist. Sowohl das Elastomer als auch der Thermoplast beziehungsweise der Duroplast können grundsätzlich beliebig gewählt sein. Bevorzugt liegt der Elastomer jedoch in Form eines Ethylen-Propylen-Dien-Kautschuks (EPDM) oder eines hydrierten Acrylnitril-Butadien-Kautschuks (HMBR) vor, wobei letzterer besonders bevorzugt peroxidisch vernetzt ist, um eine hohe Medienbeständigkeit zu erzielen. Das zweite Material kann beispielsweise ein partiell aromatisches Polyamid (PPA) beziehungsweise Polyphthalamid, Polyamid, insbesondere PA612 oder Polypropylen (PP) sein. Bevorzugt ist das zweite Material faserverstärkt, insbesondere glasfaserverstärkt oder kohlefaserverstärkt.

Zusätzlich oder alternativ kann das zweite Material hydrolysestabilisiert sein. Auch das erste Material kann grundsätzlich faserverstärkt und/oder hydrolysestabilisiert sein. Besonders bevorzugt ist es vorgesehen, dass das erste Material oder das zweite Material oder sowohl das erste Material als auch das zweite Material haftungsoptimiert sind. Als Beispiel für ein haftungsoptimiertes Material wird rein beispielhaft VESTAMID HTplus, insbesondere VESTAMID HTplus R1033 des Unternehmens Evonik Industries AG angeführt.

Im Rahmen einer weiteren Ausführungsform der Erfindung kann vorgesehen sein, dass das Schlauchtüllenaufnahmeelement auf seiner der Schlauchtüllenaufnahme abgewandten Seite eine Schlauchschellenaufnahme zur Aufnahme einer Schlauchschelle aufweist. Das bedeutet, dass der Fluidverbindungsadapter zur Befestigung an der Schlauchtülle mittels der Schlauchschelle vorgesehen und ausgebildet ist. Zur abrutschsicheren Befestigung der Schlauchschelle an dem Schlauchtüllenaufnahmeelement ist die Schlauchschellenaufnahme an diesem ausgebildet, nämlich auf seiner der Schlauchtüllenaufnahme abgewandten Außenseite.

Die Schlauchschellenaufnahme ist in axialer Richtung wenigstens einseitig, vorzugsweise jedoch beidseitig, (jeweils) mittels eines Ringstegs begrenzt. Im Falle der beidseitigen Begrenzung der Schlauchschellenaufnahme mittels der mehreren Ringstege sind die Ringstege vorzugsweise in axialer Richtung derart voneinander beabstandet, dass die Schlauchschelle nach Anordnung an dem Fluidverbindungsadapter und insbesondere nach Befestigung des Fluidverbindungsadapters an der Schlauchtülle mittels der Schlauchschelle einerseits an einem ersten der Ringstege und andererseits an einem zweiten der Ringstege anliegt. Eine solche Ausgestaltung des Schlauchtüllenaufnahmeelements verhindert ein ungewolltes Abrutschen der Schlauchschelle von dem Schlauchtüllenaufnahmeelement und stellt insoweit eine zuverlässige und dauerhafte dichte Verbindung zwischen dem Fluidverbindungsadapter und der Schlauchtülle sicher.

Eine weitere Ausführungsform der Erfindung sieht vor, dass die Schlauchtüllenaufnahme Innenquerschnittsabmessungen aufweist, die sich ausgehend von Innenquerschnittsabmessungen des Anschlussstutzens auf seiner dem Schlauchtüllenaufnahmeelement zugewandten Seite in die von dem Anschlussstutzen abgewandte Richtung vergrößern. Sowohl in dem Anschlussstutzen als auch in dem Schlauchtüllenaufnahmeelement liegt jeweils eine Durchtrittsöffnung beziehungsweise ein Hohlraum vor, wobei die Durchtrittsöffnungen beziehungsweise Hohlräume ineinander übergehen oder zumindest miteinander in Strömungsverbindung stehen. Die Durchtrittsöffnung des Anschlussstutzens ist fluidführend, wohingegen die Durchtrittsöffnung des Schlauchtüllenaufnahmeelements zumindest bereichsweise die Schlauchtüllenaufnahme ausbildet.

Die Durchtrittsöffnungen des Anschlussstutzens und des Schlauchtüllenaufnahmeelements zeichnen sich durch die jeweiligen Innenquerschnittsabmessungen aus. Die Innenquerschnittsabmessungen des Anschlussstutzens sind beispielsweise in Strömungsrichtung beziehungsweise in axialer Richtung über die gesamte Erstreckung des Anschlussstutzens konstant. Die Innenquerschnittsabmessungen der Schlauchtüllenaufnahme hingegen verändern sich über die Erstreckung der Schlauchtüllenaufnahme beziehungsweise des Schlauchtüllenaufnahmeelements hinweg jedoch. So entsprechen sie an dem Übergang zwischen dem Schlauchtüllenaufnahmeelement und dem Anschlussstutzen beispielsweise den Innenquerschnittsabmessungen des Anschlussstutzens. Alternativ können sie auch größer sein, sodass eine sprungartige Vergrößerung der Innenquerschnittsabmessungen an dem Übergang von dem Anschlussstutzen zu dem Schlauchtüllenaufnahmeelement auftritt.

In jedem Fall vergrößern sich die Innenquerschnittsabmessungen der Schlauchtüllenaufnahme in die von dem Anschlussstutzen abgewandte Richtung. Mit einer derartigen Ausgestaltung des Fluidverbindungsadapters wird sichergestellt, dass der Fluidverbindungsadapter zur Anbindung an eine Schlauchtülle geeignet ist, die Innenquerschnittsabmessungen aufweist, die zumindest so groß sind wie die des Anschlussstutzens. Besonders bevorzugt ist der Fluidverbindungsadapter derart ausgestaltet, dass die Innenquerschnittsabmessungen der in der Schlauchtüllenaufnahme aufgenommenen Schlauchtülle den Innenquerschnittsabmessungen des Anschlussstutzens entsprechen, sodass also ein Durchströmungsquerschnitt der Schlauchtülle mit einem Durchströmungsquerschnitt des Anschlussstutzens übereinstimmt oder größer ist. Auf diese Art und Weise werden Strömungsverluste in dem Fluidverbindungsadapter verhindert.

Eine weitere Ausführungsform der Erfindung sieht vor, dass das Aufweiten der Innenquerschnittsabmessungen stetig erfolgt, insbesondere über eine axiale Erstreckung, die um mindestens einen Faktor von 0,5, 1,0, 1,5 oder 2,0 größer ist als eine Differenz zwischen den Innenquerschnittsabmessungen der Schlauchtüllenaufnahme und den Innenquerschnittsabmessungen des Anschlussstutzens. In anderen Worten ist ein sanftes und nicht sprunghaftes Aufweiten der Innenquerschnittsabmessungen vorgesehen und umgesetzt. Beispielsweise ist die Schlauchtüllenaufnahme auf ihrer dem Anschlussstutzen zugewandten Seite zumindest bereichsweise kegelstumpfförmig, wobei die die Schlauchtüllenaufnahme begrenzende Wand auf ihrer der Schlauchtüllenaufnahme zugewandte Seite im Längsschnitt beziehungsweise Längshalbschnitt gesehen eine konstante Steigung aufweist.

Bevorzugt ist zusätzlich der Fluidverbindungsadapter derart ausgestaltet, dass eine maximale Einstecktiefe der Schlauchtülle in die Schlauchtüllenaufnahme derart ist, dass bei in die Schlauchtüllenaufnahme eingesteckter Schlauchtülle die Schlauchtülle erst nach dem vollständigen Aufweiten der Innenquerschnittsabmessungen beginnt. In anderen Worten ist der Fluidverbindungsadapter derart ausgestaltet, dass bei bestimmungsgemäß in der Schlauchtüllenaufnahme angeordneter Schlauchtülle die Schlauchtülle außerhalb des Aufweitungsbereichs angeordnet ist. Mit einer derartigen Ausgestaltung wird ein besonders geringer Strömungswiderstand des Fluidverbindungsadapters sichergestellt.

Die Erfindung sieht vor, dass der Anschlussstutzen von einem, insbesondere ringförmigen, Basiselement ausgeht, das an dem Schlauchtüllenaufnahmeelement befestigt ist. Das Schlauchtüllenaufnahmeelement ist unmittelbar an dem Basiselement befestigt. Der Anschlussstutzen liegt beabstandet von dem Schlauchtüllenaufnahmeelement auf der dem Schlauchtüllenaufnahmeelement abgewandten Seite des Basiselements vor und erstreckt sich ausgehend von dem Basiselement in die von dem Schlauchtüllenaufnahmeelement abgewandte Richtung. Vorzugsweise fällt eine Längsmittelachse des Anschlussstutzens mit einer Längsmittelachse des Basiselements zusammen. Dies gilt insbesondere im Falle der ringförmigen Ausgestaltung des Basiselements. In letzterem Fall ist das Basiselement nach Art eines Ringkragens an dem Anschlussstutzen ausgebildet und erstreckt sich ausgehend von diesem in radialer Richtung nach außen. Die Verwendung des Basiselements ermöglicht eine besonders zuverlässige Befestigung des Anschlussstutzens an dem Schlauchtüllenaufnahmeelement.

Eine bevorzugte weitere Ausführungsform der Erfindung sieht vor, dass das Schlauchtüllenaufnahmeelement und der Anschlussstutzen koaxial angeordnet sind, oder dass das Schlauchtüllenaufnahmeelement bezüglich des Anschlussstutzens angewinkelt ist. In ersterem Fall fällt eine Längsmittelachse des Schlauchtüllenaufnahmeelements mit einer Längsmittelachse des Anschlussstutzens zusammen. In letzterem Fall ist die Längsmittelachse des Schlauchtüllenaufnahmeelements bezüglich der Längsmittelachse des Anschlussstutzens angewinkelt oder windschief zu ihr angeordnet. Der Fluidverbindungsadapter kann also gerade oder angewinkelt ausgestaltet sein, sodass eine besonders flexible Anpassung an dem Einbauort des Fluidverbindungsadapters gegeben ist. Bei der angewinkelten Ausgestaltung schneiden sich die Längsmittelachsen der Schlauchtüllenaufnahme und des Anschlussstutzens beispielsweise unter einem Winkel, der größer als 0° und kleiner als 180° ist. Bevorzugt beträgt der Winkel 45°, 90° oder 135°.

Eine Weiterbildung der Erfindung sieht vor, dass das Schlauchtüllenaufnahmeelement mit dem Anschlussstutzen formschlüssig und/oder stoffschlüssig verbunden ist, insbesondere an den Anschlussstutzen angespritzt ist. In jedem Fall ist das Schlauchtüllenaufnahmeelement fluiddicht mit dem Anschlussstutzen verbunden. Grundsätzlich ist eine formschlüssige oder stoffschlüssige Verbindung des Schlauchtüllenaufnahmeelements mit dem Anschlussstutzen hinreichend, um einerseits eine zufriedenstellende Stabilität des Fluidverbindungsadapters und andererseits eine hervorragende Dichtheit sicherzustellen. Die stoffschlüssige Verbindung wird beispielsweise durch Anspritzen des Schlauchtüllenaufnahmeelements an den Anschlussstutzen hergestellt. Besonders bevorzugt ist jedoch die Verbindung sowohl formschlüssig als auch stoffschlüssig.

Die Erfindung sieht vor, dass an dem Basiselement wenigstens ein in das Schlauchtüllenaufnahmeelement eingreifender erster Vorsprung und/oder mehrere in das Schlauchtüllenaufnahmeelement eingreifende zweite Vorsprünge ausgebildet sind. Der erste Vorsprung und/oder die mehreren zweiten Vorsprünge dienen der Anbindung des Schlauchtüllenaufnahmeelements an den Anschlussstutzen beziehungsweise umgekehrt. Der erste Vorsprung und/oder die zweiten Vorsprünge gehen von dem Basiselement aus, insbesondere erstrecken sie sich in die von dem Anschlussstutzen abgewandte Richtung. Vorzugsweise sind der erste Vorsprung und/oder die zweiten Vorsprünge mit dem Schlauchtüllenaufnahmeelement umspritzt. Das bedeutet, dass der erste Vorsprung und/oder die zweiten Vorsprünge vollständig in dem Schlauchtüllenaufnahmeelement aufgenommen sind, soweit sie über das Basiselement überstehen.

Hierzu ist das Schlauchtüllenaufnahmeelement an das Basiselement angespritzt, nämlich derart, dass der erste Vorsprung und/oder die zweiten Vorsprünge in dem Schlauchtüllenaufnahmeelement angeordnet beziehungsweise von diesem aufgenommen sind. Auf diese Art und Weise wird eine besonders zuverlässige Verbindung zwischen dem Anschlussstutzen und dem Schlauchtüllenaufnahmeelement erzielt. Beispielsweise ist lediglich ein einziger erster Vorsprung an dem Basiselement ausgebildet. Besonders bevorzugt liegen jedoch mehrere erste Vorsprünge an dem Basiselement vor. Sofern mehrere erste Vorsprünge vorliegen, sind diese besonders bevorzugt gleichmäßig über den Umfang des Basiselements hinweg verteilt angeordnet. Dies kann ebenso für die zweiten Vorsprünge gelten.

Beispielsweise ist es vorgesehen, dass der wenigstens eine erste Vorsprung in axialer Richtung ausgehend von dem Basiselement eine größere Erstreckung aufweist als die zweiten Vorsprünge. Beispielsweise beträgt die Erstreckung der zweiten Vorsprünge in axialer Richtung beziehungsweise in die von dem Anschlussstutzen abgewandte Richtung bezogen auf die Erstreckung des wenigstens einen ersten Vorsprungs in diese Richtung höchstens 5 %, höchstens 10 %, höchstens 15 %, höchstens 20 % oder höchstens 25 %.

Die Erfindung sieht vor, dass der erste Vorsprung aus mehreren Stegen besteht, die beabstandet voneinander an dem Basiselement angreifen und auf ihrer dem Basiselement abgewandten Seite aneinander befestigt sind, sodass zwischen den Stegen wenigstens eine Öffnung vorliegt. Der erste Vorsprung weist insoweit wenigstens zwei Stege, vorzugsweise jedoch drei Stege, oder vier Stege auf. Zumindest ein Teil der Stege des ersten Vorsprungs oder alle Stege gehen von dem Basiselement aus. Alle Stege des ersten Vorsprungs sind auf ihrer dem Basiselement abgewandten Seite miteinander verbunden beziehungsweise aneinander befestigt. Hierbei sind die Stege jedoch derart beabstandet voneinander angeordnet, sodass zwischen wenigstens zwei der Stege eine Öffnung vorliegt, insbesondere eine spaltartige Öffnung. Vorzugsweise ist zwischen jedem der Stege des ersten Vorsprungs und einem unmittelbar benachbart zu ihm angeordneten der Stege eine solche Öffnung ausgebildet.

Es kann vorgesehen sein, dass lediglich ein Teil der Stege des ersten Vorsprungs an dem Basiselement angreifen beziehungsweise von diesem ausgehen. In diesem Fall verfügt der erste Vorsprung über wenigstens einen Steg, vorzugsweise mehrere Stege, die an den von dem Basiselement ausgehenden Stegen befestigt sind und sich in Richtung des Basiselements erstrecken, jedoch von diesem beabstandet enden. Dieser Steg beziehungsweise diese Stege sind mit einem korrespondierenden Steg beziehungsweise korrespondierenden Stegen eines anderen ersten Vorsprungs verbrunden. Eine derartige Ausgestaltung ermöglicht eine besonders zuverlässige und dennoch flexible Verbindung des Anschlussstutzens mit dem Schlauchtüllenaufnahmeelement. Eine bevorzugte weitere Ausgestaltung der Erfindung sieht vor, dass der wenigstens eine erste Vorsprung zumindest eine Ausnehmung zur bereichsweisen Aufnahme des Schlauchtüllenaufnahmeelements aufweist. Die Ausnehmung liegt insbesondere in Form einer Bohrung vor, welche beispielsweise als Sackbohrung oder als Durchtrittsbohrung ausgestaltet sein kann. Vorzugsweise weist der erste Vorsprung eine Vielzahl derartiger Ausnehmungen auf. Sind mehrere erste Vorsprunge vorgesehen, so liegen die wenigstens eine Ausnehmung beziehungsweise die mehreren Ausnehmungen bevorzugt an jedem der ersten Vorsprünge vor.

Die Ausnehmung beziehungsweise die Ausnehmungen sind derart ausgestaltet, dass nach der Anbindung des Schlauchtüllenaufnahmeelements an den Anschlussstutzen das Schlauchtüllenaufnahmeelement bereichsweise in ihnen aufgenommen ist. Beispielsweise wird das Schlauchtüllenaufnahmeelement derart an den Anschlussstutzen beziehungsweise das Basiselement angespritzt, dass die zumindest eine Ausnehmung von dem Material des Schlauchtüllenaufnahmeelements durchsetzt wird. Hierdurch wird eine besonders zuverlässige Anbindung des Schlauchtüllenaufnahmeelements an den Anschlussstutzen erzielt, nämlich eine formschlüssige.

Zusätzlich oder alternativ kann vorgesehen sein, dass der wenigstens eine erste Vorsprung flexibler ist als das Basiselement und/oder der Anschlussstutzen. Hierzu weist der erste Vorsprung vorzugsweise eine geringere Materialstärke auf als das Basiselement beziehungsweise der Anschlussstutzen. Somit wird eine einerseits flexible Anbindung des Schlauchtüllenaufnahmeelements an den Anschlussstutzen erzielt, welche andererseits äußerst dauerhaft ist. Eine weitere bevorzugte Ausgestaltung der Erfindung sieht vor, dass der wenigstens eine erste Vorsprung das Schlauchtüllenaufnahmeelement in axialer Richtung zumindest 25 %, mindestens 50 %, mindestens 75 %, mindestens 80 %, mindestens 85 % oder mindestens 90 % durchgreift. Der erste Vorsprung erstreckt sich also so weit in die von dem Anschlussstutzen abgewandte Richtung, dass das Schlauchtüllenaufnahmeelement zumindest bereichsweise, insbesondere größtenteils oder sogar überwiegend, durchgriffen ist. Eine derartige Ausgestaltung ermöglicht eine zuverlässige Anbindung des Anschlussstutzens an die Schlauchtülle mittels des Fluidverbindungsadapters.

Dies wird insbesondere dadurch erzielt, dass der mindestens eine erste Vorsprung im Längsschnitt gesehen zumindest teilweise mit der Schlauchschellenaufnahme in Überdeckung steht, insbesondere die Schlauchschellenaufnahme im Längsschnitt gesehen vollständig überdeckt. In anderen Worten ist es vorgesehen, dass nach der Befestigung des Fluidverbindungsadapters an der Schlauchtülle mittels der Schlauchschelle die Schlauchschelle den ersten Vorsprung zumindest bereichsweise beaufschlagt, insbesondere in radialer Richtung nach innen in Richtung der Schlauchtülle drängt. Auf diese Art und Weise ist der Anschlussstutzen beziehungsweise das Basiselement nicht nur mittelbar über das Schlauchtüllenaufnahmeelement an die Schlauchtülle angebunden, sondern vielmehr mittels der Schlauchschelle unmittelbar bezüglich der Schlauchtülle gehalten.

Eine bevorzugte weitere Ausführungsform der Erfindung sieht vor, dass die zweiten Vorsprünge ringförmig bezüglich einer Längsmittelachse des Basiselements angeordnet sind und/oder dass die zweiten Vorsprünge abwechselnd in radialer Richtung versetzt zueinander angeordnet sind. Die zweiten Vorsprünge umgreifen also die Längsmittelachse des Basiselements nach Art eines Rings. Hierzu sind sie vorzugsweise in Umfangsrichtung gleichmäßig verteilt angeordnet. Zusätzlich oder alternativ kann es vorgesehen sein, dass die zweiten Vorsprünge abwechselnd in radialer Richtung versetzt zueinander angeordnet sind, also abwechselnd an einer ersten Radialposition und einer zweiten Radialposition angeordnet sind, wobei die zweite Radialposition von der ersten Radialposition verschieden ist. In anderen Worten ist in Umfangsrichtung gesehen ein mäanderförmiger Verlauf der zweiten Vorsprünge realisiert. Beispielsweise greifen die zweiten Vorsprünge in eine an dem Basiselement ausgebildete Vertiefung ein, welche ebenfalls in Umfangsrichtung mäanderförmig verläuft. Auf diese Art und Weise ist ein besonders zuverlässiges Halten des Schlauchtüllenaufnahmeelements dem Anschlussstutzen beziehungsweise dem Basiselement sichergestellt.

Eine weitere Ausführungsform der Erfindung sieht vor, dass das Schlauchtüllenaufnahmeelement einen Dehnungsbereich aufweist, indem eine Flexibilität des Schlauchtüllenaufnahmeelements, insbesondere in axialer Richtung, größer ist als in einem außerhalb des Dehnungsbereichs liegenden Bereich des Schlauchtüllenaufnahmeelements. Der Dehnungsbereich ist beispielsweise zur Realisierung eines Toleranzausgleichs vorgesehen und ausgebildet. Der Dehnungsbereich kann eine Dehnung des Schlauchtüllenaufnahmeelements in axialer Richtung derart zulassen, dass entweder eine axiale Längung des Schlauchtüllenaufnahmeelements oder eine Biegung des Schlauchtüllenaufnahmeelements vorliegt.

In anderen Worten können mittels des Dehnungsbereichs ein Axialversatz und/oder ein Winkelversatz ausgeglichen werden. Der Dehnungsbereich ist durch eine bereichsweise höhere Flexibilität des Schlauchtüllenaufnahmeelements ausgebildet. Vorzugsweise ist der Dehnungsbereich in axialer Richtung beidseitig randbeabstandet an dem Schlauchtüllenaufnahmeelement ausgebildet, sodass der Dehnungsbereich in axialer Richtung von Enden des Schlauchtüllenaufnahmeelements beabstandet angeordnet ist. Der Dehnungsbereich ermöglicht auf besonders einfache Art und Weise den vorstehend bereits erwähnten Axialversatzausgleich und/oder Winkelversatzausgleich.

Eine bevorzugte Weiterbildung der Erfindung sieht vor, dass der wenigstens eine Vorsprung und/oder die zweiten Vorsprünge beabstandet von dem Dehnungsbereich angeordnet sind. In anderen Worten ist umgekehrt der Dehnungsbereich abseits des wenigstens einen Vorsprungs beziehungsweise der zweiten Vorsprünge angeordnet. Entsprechend beeinflussen die Vorsprünge die Flexibilität des Schlauchtüllenaufnahmeelements in dem Dehnungsbereich nicht oder zumindest nicht wesentlich. Der zuverlässige Ausgleich des Längenversatzes beziehungsweise des Winkelversatzes ist somit gewährleistet.

Eine weitere Ausführungsform der Erfindung sieht vor, dass der Dehnungsbereich zwischen der Schlauchtüllenaufnahme und einem an dem Basiselement angreifenden Ende des Schlauchtüllenaufnahmeelements vorliegt. Nach bestimmungsgemäßem Verbinden des Fluidverbindungsadapters mit der Schlauchtülle ist also letztere zumindest über den Dehnungsbereich von dem Anschlussstutzen beziehungsweise dem Basiselement beabstandet. Aufgrund des zwischen der Schlauchtüllenaufnahme beziehungsweise der Schlauchtülle einerseits und dem Basiselement andererseits angeordneten Dehnungsbereich ist ein hervorragender Versatzausgleich mittels des Fluidverbindungsadapters sichergestellt.

Eine weitere bevorzugte Ausgestaltung der Erfindung sieht vor, dass die Wand des Schlauchtüllenaufnahmeelements in dem Dehnungsbereich wellenförmig verläuft und/oder eine geringere Wandstärke aufweist als außerhalb des Dehnungsbereichs. Durch den im Längsschnitt gesehen wellenförmigen Verlauf der Wand und/oder die geringere Wandstärke wird die höhere Flexibilität in dem Dehnungsbereich realisiert. Der wellenförmige Verlauf lässt insbesondere eine Dehnung des Dehnungsbereichs in axialer Richtung ohne weiteres zu. Es kann vorgesehen sein, dass die wellenförmig verlaufende Wand in dem Dehnungsbereich dieselbe Wandstärke aufweist wie außerhalb des Dehnungsbereichs. Es kann jedoch auch vorgesehen sein, dass die Wand die im Vergleich mit der außerhalb des Dehnungsbereichs vorliegenden Wandstärke geringere Wandstärke zusätzlich zu dem wellenförmigen Verlauf aufweist. In jedem Fall ist der Dehnungsbereich hinreichend flexibel, um einen Versatzausgleich zu realisieren.

Im Rahmen einer weiteren Ausführungsform ist ein Rückschlagventil vorgesehen, dass eine Strömungsverbindung durch den Fluidverbindungsadapter bei einer ersten Durchströmungsrichtung unterbricht und bei einer der ersten Durchströmungsrichtung entgegengesetzten zweiten Durchströmungsrichtung freigibt. Das Rückschlagventil ist in den Fluidverbindungsadapter integriert, wodurch sich bauliche Vorteile ergeben. Das Rückschlagventil ist gemäß der üblichen Funktion eines solchen Rückschlagventils derart ausgestaltet, dass es eine Durchströmung des Fluidverbindungsadapter in der ersten Durchströmungsrichtung unterbricht und in der zweiten Durchströmungsrichtung freigibt, wobei die zweite Durchströmungsrichtung der ersten Durchströmungsrichtung entgegengerichtet ist. Es kann vorgesehen sein, dass das Rückschlagventil die Strömungsverbindung bei Vorliegen der ersten Durchströmungsrichtung vollständig unterbricht. Es kann jedoch auch vorgesehen sein, dass ein Leckagestrom durch das Rückschlagventil auch bei Vorliegen der ersten Durchströmungsrichtung zugelassen wird.

Das Rückschlagventil verfügt vorzugsweise über ein Ventilelement, welches bei der ersten Durchströmungsrichtung eine erste Stellung und bei der zweiten Durchströmungsrichtung eine zweite Stellung einnimmt. In der ersten Stellung unterbricht das Ventilelement die Strömungsverbindung durch den Fluidverbindungsadapter, beispielsweise durch Zusammenwirken mit einem Ventilsitz, insbesondere durch Anliegen an dem Ventilsitz. In der zweiten Stellung gibt das Ventilelement hingegen die Strömungsverbindung durch den Fluidverbindungsadapter frei, beispielweise ist es hierzu zumindest bereichsweise oder sogar vollständig von dem Ventilsitz beabstandet angeordnet.

Eine bevorzugt weitere Ausgestaltung der Erfindung sieht vor, dass das Rückschlagventil einen Ventilsitz und ein mit dem Ventilsitz zum Unterbrechen der Strömungsverbindung zusammenwirkendes Ventilelement aufweist. Hierauf wurde vorstehend bereits hingewiesen. Die Ausgestaltung des Rückschlagventils mit Ventilsitz und Ventilelement ist konstruktiv einfach und kostengünstig umsetzbar. Vorzugsweise ist das Ventilelement derart ausgestaltet, dass es druckstabil gegenüber einem in die erste Durchströmungsrichtung wirkenden Überdruck ist. Hierzu ist es beispielsweise kugelabschnittsförmig oder rotationsparaboloidförmig ausgestaltet.

Eine bevorzugte Weiterbildung der Erfindung sieht vor, dass das Ventilelement von dem Schlauchtüllenaufnahmeelement gebildet ist, und/oder dass der Ventilsitz von dem Anschlussstutzen gebildet ist. Bevorzugt ist das Ventilelement einstückig und/oder materialeinheitlich mit dem Schlauchtüllenaufnahmeelement ausgebildet. Vorzugsweise ragt das Ventilelement in die Schlauchtüllenaufnahme hinein. Dies ermöglicht eine besonders einfache und kostengünstige Ausgestaltung des Rückschlagventils. Zusätzlich oder alternativ kann der Ventilsitz von dem Anschlussstutzen gebildet sein. Zur Bereitstellung des Rückschlagventils ist also kein separater Ventilsitz herzustellen, vielmehr wird der Ventilsitz von dem Anschlussstutzen, insbesondere von einer Stirnseite des Anschlussstutzens, gebildet. Zum Unterbrechen der Strömungsverbindung kann sich das Ventilelement dichtend an den Anschlussstutzen beziehungsweise dessen Stirnseite anlegen.

Besonders bevorzugt ist das Ventilelement als Ventilklappe ausgebildet. Das bedeutet, dass das Ventilelement um eine Drehachse drehbar gelagert ist, insbesondere an dem Schlauchtüllenaufnahmeelement und/oder bezüglich des Schlauchtüllenaufnahmeelements, Hierzu ist das Ventilelement - wie bereits erläutert - in einer besonders vorteilhaften Ausgestaltung einstückig und/oder materialeinheitlich mit dem Schlauchtüllenaufnahmeelement ausgebildet.

Eine Weiterbildung der Erfindung sieht vor, dass das Ventilelement in wenigstens einer Stellung in axialer Richtung in Überdeckung mit einer in dem Schlauchtüllenaufnahmeelement ausgebildeten Halteaufnahme zum formschlüssigen Halten der Schlauchtülle in dem Schlauchtüllenaufnahmeelement steht. Die Halteaufnahme dient dem formschlüssigen Halten der Schlauchtülle in dem Schlauchtüllenaufnahmeelement. Die Halteaufnahme erstreckt sich ausgehend von der Schlauchtüllenaufnahme in radialer Richtung nach außen, sodass die Schlauchtülle in diese Richtung in die Halteaufnahme formschlüssig eingreift beziehungsweise eingreifen kann. Das Ventilelement ist derart ausgestaltet, dass es in der wenigstens einen Stellung in axialer Richtung in Überdeckung mit der Halteaufnahme steht. Dies bedeutet nichts anderes, als dass das Ventilelement in dieser Stellung in die Schlauchtülle eingreift. Hierdurch wird eine besonders kompakte Ausgestaltung des Fluidverbindungsadapters erzielt.

Eine bevorzugte weitere Ausführungsform der Erfindung sieht vor, dass das Rückschlagventil einen von dem Anschlussstutzen ausgehenden und sich in die von dem Anschlussstutzen abgewandte Richtung erstreckenden Strömungskanal bildet, der von einer von einem Innenumfang des Schlauchtüllenaufnahmeelements beabstandeten Kanalwand begrenzt ist. Die Strömungsverbindung durch den Fluidverbindungsadapter verläuft durch diesen Strömungskanal, insbesondere vollständig. Der Strömungskanal weist in radialer Richtung kleinere Abmessungen auf als die Schlauchtüllenaufnahme, insbesondere einen kleineren Durchmesser. Der Strömungskanal wird in radialer Richtung von der Kanalwand begrenzt, welche von dem Innenumfang der Schlauchtüllenaufnahme beabstandet ist. Insoweit bildet die Kanalwand zusammen mit dem Innenumfang der Schlauchtüllenaufnahme eine Aufnahmekammer für die Schlauchtülle, insbesondere für ein stirnseitiges Ende der Schlauchtülle. Bei einer Montage des Fluidverbindungsadapters auf der Schlauchtülle wird also die Schlauchtülle vorzugsweise derart in der Schlauchtüllenaufnahme angeordnet, dass sie in axialer Richtung in Überdeckung mit der Kanalwand steht. Hierdurch wird wiederum eine kompakte Ausgestaltung des Fluidverbindungsadapters realisiert.

Eine weitere Ausführungsform der Erfindung sieht vor, dass auf der dem Anschlussstutzen abgewandten Seite des Strömungskanals ein Entenschnabelventil an der Kanalwand angeordnet ist, insbesondere einstückig mit der Kanalwand ausgebildet ist. Das Entenschnabelventil schließt sich insoweit strömungstechnisch an den Strömungskanal an. Es ist besonders bevorzugt einstückig und/oder materialeinheitlich mit der Kanalwand ausgebildet. Das Entenschnabelventil ist besonders bevorzugt einstückig und/oder materialeinheitlich mit dem Schlauchtüllenaufnahmeelement ausgebildet. Nach der Montage des Fluidverbindungsadapters an der Schlauchtülle erstrecken sich die Kanalwand und mithin auch das Entenschnabelventil bei einer bevorzugten Ausgestaltung des Fluidverbindungsadapters in die Schlauchtülle hinein. Das Entenschnabelventil hat den Vorteil, dass es äußerst hohen Drücken in Schließrichtung standhalten kann, also eine Durchströmung des Fluidverbindungsadapters in die erste Durchströmungsrichtung äußerst zuverlässig verhindert. Dies wird erreicht, indem das Entenschnabelventil von einem in die erste Durchströmungsrichtung wirkenden Druck komprimiert wird.

Eine weitere bevorzugte Ausgestaltung der Erfindung sieht vor, dass das Entenschnabelventil wenigstens zwei Ventillippen aufweist, die die Strömungsverbindung bei der ersten Durchströmungsrichtung unterbrechen und bei der zweiten Durchströmungsrichtung freigeben. Vorzugsweise verfügt das Entenschnabelventil über eine gerade Anzahl an Ventillippen, also beispielsweise zwei Ventillippen oder vier Ventillippen. Die Ventillippen sind derart gelagert, dass jede der Ventillippen von den anderen Ventillippen fortgeschwenkt werden kann, nämlich um eine jeweilige Drehachse. Die Ventillippen sind vorzugsweise einstückig und/oder materialeinheitlich mit der Kanalwand beziehungsweise dem Schlauchtüllenaufnahmeelement ausgebildet, sodass eine einfache und kostengünstige Herstellung sichergestellt ist.

Schließlich kann im Rahmen einer weiteren Ausgestaltung der Erfindung vorgesehen sein, dass zusätzlich zu dem Anschlussstutzen wenigstens ein weiterer Anschlussstutzen zur Kopplung mit einer weiteren Rohrleitung vorliegt. Der Fluidverbindungsadapter ist in anderen Worten zur gleichzeitig fluidtechnischen Verbindung der Schlauchtülle mit der Rohrleitung und der wenigstens einen weiteren Rohrleitung vorgesehen und ausgebildet. Über den Fluidverbindungsadapter kann insoweit die Schlauchtülle mit mehreren Rohrleitungen fluidtechnisch verbunden werden beziehungsweise verbunden sein. Der Fluidverbindungsadapter dient insoweit zusätzlich als Fluidverteiler.

Es kann lediglich ein einziger weiterer Anschlussstutzen zur Kopplung einer einzigen weiteren Rohrleitung vorgesehen sein. Alternativ können selbstverständlich mehrere weitere Anschlussstutzen zur Kopplung mit mehreren weiteren Rohrleitungen ausgeführt sein. Für den weiteren Anschlussstutzen sind die Ausführungen im Rahmen dieser Beschreibung zu dem Anschlussstutzen auf analoge Art und Weise heranzuziehen. Entsprechendes gilt für die weitere Rohrleitung und die Rohrleitung. Die Rohrleitung und die weitere Rohrleitung können denselben Nenndurchmesser oder verschiedene Nenndurchmesser aufweisen. Der Anschlussstutzen und der weitere Anschlussstutzen sind entsprechend ausgestaltet.

Die Erfindung betrifft weiterhin eine Fluidverbindungsanordnung, mit einer Rohrleitung, einer Schlauchtülle und einem Fluidverbindungsadapter, insbesondere einem Fluidverjüngungsadapter gemäß den Ausführungen im Rahmen dieser Beschreibung, wobei der Fluidverbindungsadapter zur fluidtechnischen Verbindung der Rohrleitung mit der Schlauchtülle einen starren Anschlusskopplung zur Kopplung mit der Rohrleitung sowie eine in einer flexiblen Schlauchtüllenaufnahmeelement ausgebildete Schlauchtüllenaufnahme zur Aufnahme der Schlauchtülle aufweist. Auf die Vorteile einer derartigen Ausgestaltung der Fluidverbindungsanordnung beziehungsweise des Fluidverbindungsadapters wurde bereits hingewiesen. Sowohl die Fluidverbindungsanordnung als auch der Fluidverbindungsadapter können gemäß den Ausführungen im Rahmen dieser Beschreibung weitergebildet sein, sodass insoweit auf diese verwiesen wird.

Zudem betrifft die Erfindung ein Verfahren zum Herstellen eines Fluidverbindungsadapter gemäß dem Anspruch 14.

Erneut wird zur vorteilhaften Ausgestaltung des Fluidverbindungsadapters sowie dem Verfahren zu seiner Herstellung auf die weiteren Ausführungen im Rahmen dieser Beschreibung verwiesen. Beispielsweise wird der Fluidverbindungsadapter hergestellt, indem das Schlauchtüllenaufnahmeelement an den Anschlussstutzen beziehungsweise das Basiselement, von welchem der Anschlussstutzen ausgeht, angespritzt wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung einer Fluidverbindungsanordnung mit einer Schlauchtülle und einem Fluidverbindungsadapter, in geschnittener Darstellung,
- Figur 2: eine schematische ungeschnittene Darstellung der Fluidverbindungsanordnung,
- Figur 3: eine schematische Längsschnittdarstellung des Fluidverbindungsadapters in einer ersten Ausführungsform,
- Figur 4: eine schematische Darstellung des Fluidverbindungsadapters in einer zweiten Ausführungsform,
- Figur 5: eine nicht erfindungsgemäße schematische Darstellung des von einem Basiselement ausgehenden Anschlussstutzens,
- Figur 6: eine schematische Schnittdarstellung des Basiselements und des Anschlussstutzens,
- Figur 7: eine schematische Darstellung des Fluidverbindungsadapters,
- Figur 8: eine schematische Längsschnittdarstellung des Fluidverbindungsadapters,
- Figur 9: eine schematische Darstellung der Fluidverbindungsanordnung in einer ersten Ausführungsvariante,
- Figur 10: die Fluidverbindungsanordnung in einer zweiten Ausführungsvariante,
- Figur 11: die Fluidverbindungsanordnung in einer dritten Ausführungsvariante,
- Figur 12: eine nicht erfindungsgemäße schematische Darstellung des Anschlussstutzens und des Basiselements mit einer ersten Befestigungskonfiguration,
- Figur 13: eine erfindungsgemäße schematische Darstellung des Anschlussstutzens und des Basiselements für eine zweite Befestigungskonfiguration,
- Figur 14: eine schematische Schnittdarstellung des Fluidverbindungsadapters,
- Figur 15: eine weitere schematische Längsschnittdarstellung des Fluidverbindungsadapters
- Figur 16: eine schematische Längsschnittdarstellung des Fluidverbindungsadapters mit einem Rückschlagventil, sowie
- Figur 17: eine schematische Längsschnittdarstellung des Fluidverbindungsadapters, wobei das Rückschlagventil als Entenschnabelventil vorliegt.

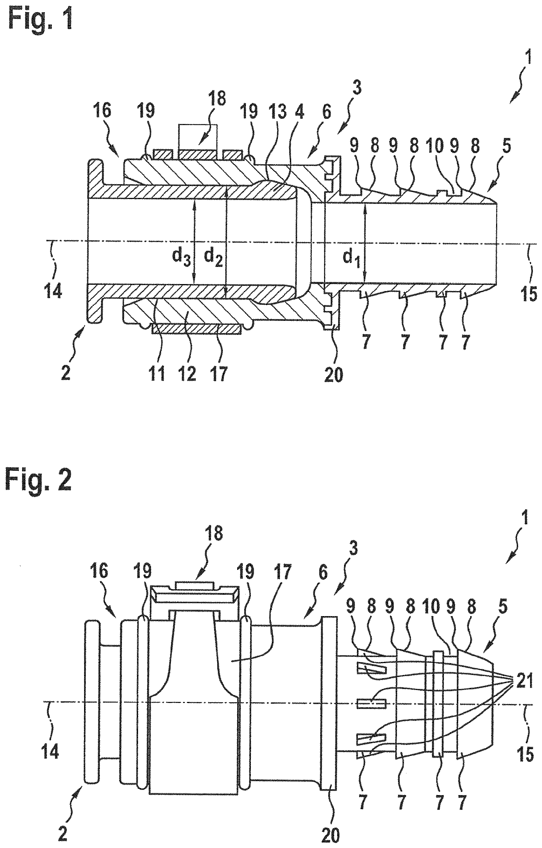

Die Figur 1 zeigt eine schematische Längsschnittdarstellung einer Fluidverbindungsanordnung 1, von welcher eine Schlauchtülle 2 sowie ein Fluidverbindungsadapter 3 dargestellt sind. Die Schlauchtülle 2 ist beispielsweise Bestandteil einer fluidführenden Einrichtung und zur fluidtechnischen Verbindung mit einer Schlauchleitung vorgesehen und ausgebildet. Die Schlauchtülle 2 weist zur Befestigung der Schlauchleitung eine Olive 4 auf, die in Form einer Verdickung mit gerundeter Außenkontur an der Schlauchtülle 2 ausgebildet ist.

Der Fluidführungsadapter 3 ist dazu vorgesehen und ausgebildet, anstelle der Schlauchleitung eine hier nicht dargestellte Rohrleitung mit der Schlauchtülle 2 fluidtechnisch zu verbinden. Hierzu verfügt er über einen starren Anschlussstutzen 5 sowie ein Schlauchtüllenaufnahmeelement 6. Der Anschlussstutzen 5 ist zur Kopplung mit der Rohrleitung vorgesehen und ausgebildet. Hierzu ist er als Rohrtülle ausgestaltet und weist wenigstens einen Ringvorsprung 7, in dem hier dargestellten Ausführungsbeispiel mehrere Ringvorsprünge 7, zum Halten der Rohrleitung auf.

Die Ringvorsprünge 7 sind nach Art eines Tannenbaumprofils beziehungsweise einer Tannenbaumkontur ausgestaltet. Sie weisen insoweit entgegen einer Aufschieberichtung zumindest eine Auflaufschräge 8 auf, die ein Aufschieben der Rohrleitung auf den Anschlussstutzen 5 erleichtert. An die Auflaufschräge 8 schließt sich im Längsschnitt gesehen eine Kante 9 an, ab welcher der Ringvorsprung 7 in radialer Richtung nach innen tritt. Der Ringvorsprung 7 beziehungsweise die Kante 9 sind derart ausgerichtet, dass ein Abziehen der Rohrleitung von dem Anschlussstutzen 5 erschwert ist. Zwischen wenigstens zwei der Ringvorsprünge 7 kann optional eine Dichtungsaufnahme 10 zur Aufnahme einer hier nicht dargestellten Dichtung vorgesehen und ausgebildet sein.

Das Schlauchtüllenaufnahmeelement 6 dient zur Aufnahme der Schlauchtülle 2 und verfügt hierzu über eine Schlauchtüllenaufnahme 11 zur Aufnahme der Schlauchtülle 2. Es ist erkennbar, dass eine die Schlauchtüllenaufnahme 11 begrenzende Wand 12 des Schlauchtüllenaufnahmeelements 6 profiliert ist und hierzu eine Halteaufnahme 13 zur Aufnahme der Olive 4 aufweist. Selbstverständlich können in der Wand 12 mehrere derartiger Halteaufnahmen 13 ausgebildet sein, nämlich vorzugsweise in axialer Richtung bezüglich einer Längsmittelachse 14 der Schlauchtüllenaufnahme 11 beziehungsweise des Schlauchtüllenaufnahmeelements 6, welche in dem hier dargestellten Ausführungsbeispiel mit einer Längsmittelachse 15 des Anschlussstutzens 5 zusammenfällt.

Das Schlauchtüllenaufnahmeelement 6 weist ein dem Anschlussstutzen 5 abgewandtes Ende 16 auf. Die Halteaufnahme 13 liegt nun auf einer dem Ende 16 abgewandten Seite einer Schlauchschellenaufnahme 17 vor, welche zur Aufnahme einer Schlauchschelle 18 vorgesehen und ausgebildet ist. Die Schlauchschelle 18 dient der Befestigung des Schlauchtüllenaufnahmeelements 6 und mithin des Fluidverbindungsadapters 3 an beziehungsweise auf der Schlauchtülle 2. Hierzu bewirkt die Schlauchschelle 18 eine Presskraft auf das Schlauchtüllenaufnahmeelement 6 in radialer Richtung nach innen. Aufgrund der Anordnung der Halteaufnahme 13 und mithin der Olive 4 auf der dem Ende 16 abgewandten Seite der Schlauchschellenaufnahme 17 und entsprechende Schlauchschelle 18 wird ein unbeabsichtigtes Entfernen beziehungsweise Herunterrutschen des Fluidverbindungsadapters 3 von der Schlauchtülle 2 zuverlässig unterbunden. Die Schlauchschellenaufnahme 17 wird vorzugsweise auf in axialer Richtung gegenüberliegenden Seiten von zwei Ringstegen 19 begrenzt. Diese verhindern ein unbeabsichtigtes Entfernen beziehungsweise Herunterrutschen der Schlauchschelle 18 von dem Fluidverbindungsadapter 3.

Der Anschlussstutzen 5 weist Innenquerschnittsabmessungen, insbesondere einen Innendurchmesser d₁ auf. Diese Innenquerschnittsabmessungen sind vorzugsweise über die gesamte Erstreckung des Anschlussstutzens 5 gleich. Die Schlauchtüllenaufnahme 11 beziehungsweise das Schlauchtüllenaufnahmeelement 6 weist hingegen Innenquerschnittsabmessungen, insbesondere einen Innendurchmesser d₂, auf. Die Innenquerschnittsabmessungen der Schlauchtüllenaufnahme 11 vergrößern sich in die von dem Anschlussstutzen 5 abgewandte Richtung. Auf diese Art und Weise ist es möglich, dass der Fluidverbindungsadapter 3 auf eine Schlauchtülle 2 aufgebracht werden kann, welche Innenquerschnittsabmessungen, insbesondere einen Innendurchmesser d₃, aufweist, die größer oder gleich den Innenquerschnittsabmessungen des Anschlussstutzens 5 sind. Auf diese Art und Weise wird eine verlustarme Durchströmung des Fluidverbindungsadapters 3 erzielt.

Beispielsweise erfolgt das Aufweiten der Innenquerschnittsabmessungen der Schlauchtüllenaufnahme 11 stetig und besonders bevorzugt über eine axiale Erstreckung, welche derart groß ist, dass eine verlustarme Durchströmung realisiert ist. Beispielsweise erfolgt hierzu das Aufweiten der Innenquerschnittsabmessungen über eine axiale Erstreckung, die um mindestens einen Faktor von 0,5 größer ist als eine Differenz zwischen den Innenquerschnittsabmessungen der Schlauchtüllenaufnahme 11 und den Innenquerschnittsabmessungen des Anschlussstutzens 5. Der Anschlussstutzen 5 geht von einem Basiselement 20 aus, das in dem hier dargestellten Ausführungsbeispiel ringförmig ist. Der Anschlussstutzen 5 erstreckt sich ausgehend von dem Basiselement 20 in die von dem Schlauchtüllenaufnahmeelement 6 abgewandte Richtung. Der Anschlussstutzen 5 ist über das Basiselement 20 an dem Schlauchtüllenaufnahmeelement 6 befestigt. Hierzu ist das Basiselement 20 formschlüssig und/oder stoffschlüssig mit dem Schlauchtüllenaufnahmeelement 6 verbunden. Besonders bevorzugt ist das Schlauchtüllenaufnahmeelement 6 an das Basiselement 20 angespritzt. Das Basiselement 20 kann hierzu auf seiner dem Schlauchtüllenaufnahmeelement 6 zugewandten Seite konturiert sein, um eine Haftwirkung des Schlauchtüllenaufnahmeelements 6 an dem Basiselement 20 zu verbessern.

Der Anschlussstutzen 5 und das Schlauchtüllenaufnahmeelement 6 bestehen aus unterschiedlichen Materialien, nämlich der Anschlussstutzen 5 aus einem ersten Material und das Schlauchtüllenaufnahmeelement 6 aus einem zweiten Material. Das zweite Material weist hierbei bevorzugt eine größere Flexibilität auf als das erste Material. Insbesondere kommt als erstes Material ein Elastomer und als zweites Material ein Thermoplast oder ein Duroplast zum Einsatz.

Die Figur 2 zeigt erneut die Fluidverbindungsanordnung 1, diesmal in einer ungeschnittenen Seitenansicht. Es ist deutlich erkennbar, dass einige der Ringvorsprünge 7 in Umfangsrichtung bezüglich der Längsmittelachse 15 durchgehend ausgebildet sind. In dem hier dargestellten Ausführungsbeispiel liegt jedoch wenigstens ein Ringvorsprung 7, insbesondere genau ein Ringvorsprung 7, vor, welcher in Umfangsrichtung unterbrochen ausgestaltet ist und sich hierzu aus einer Vielzahl von in Umfangsrichtung gleichmäßig verteilt angeordneten Einzelelementen 21 zusammensetzt. Eine derartige Ausgestaltung des Ringvorsprungs 7 verbessert die Haltewirkung des Anschlussstutzens 5 auf die Rohrleitung.

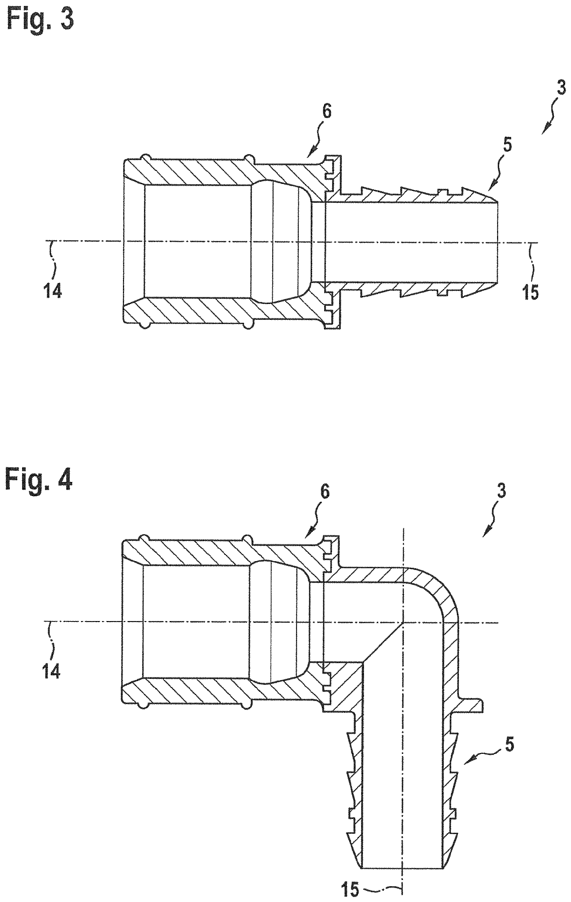

Die Figur 3 zeigt eine Längsschnittdarstellung des Fluidverbindungsadapters 3 in einer ersten Ausführungsform. Diese zeichnet sich dadurch aus, dass die Längsmittelachse 14 des Schlauchtüllenaufnahmeelements 6 und die Längsmittelachse 15 des Anschlussstutzens 5 zusammenfallen, sodass schlussendlich das Schlauchtüllenaufnahme 6 und der Anschlussstutzen 5 koaxial zueinander angeordnet sind.

Die Figur 4 zeigt eine Längsschnittdarstellung einer zweiten Ausführungsform des Fluidverbindungsadapters 3. Diese zeichnet sich dadurch aus, dass die Längsmittelachsen 14 und 15 gegeneinander angewinkelt sind, beispielsweise rechtwinklig aufeinander stehen. Entsprechend sind auch der Anschlussstutzen 5 und das Schlauchtüllenaufnahmeelement 6 gegeneinander angewinkelt, in dem hier dargestellten Ausführungsbeispiel um 90°.

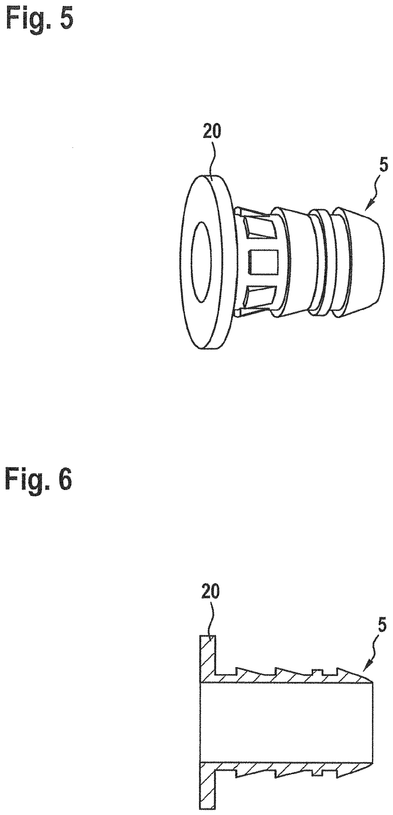

Die Figur 5 zeigt den nicht erfindungsgemäßen Anschlussstutzen 5 mit dem daran vorliegenden Basiselement 20 vor der Ausbildung des Schlauchtüllenaufnahmeelements 6. In dem hier dargestellten Ausführungsbeispiel ist die dem Anschlussstutzen 5 abgewandte Seite des Basiselements 20 eben ausgestaltet, insbesondere vollständig eben. Das Schlauchtüllenaufnahmeelement 6 wird an dieser Seite an das Basiselement 20 angespritzt.

Die Figur 6 zeigt eine Längsschnittdarstellung des Anschlussstutzens 5 und des Basiselements 20. Um Wiederholungen zu vermeiden wird auf die weiteren Ausführungen im Rahmen dieser Beschreibung verwiesen.

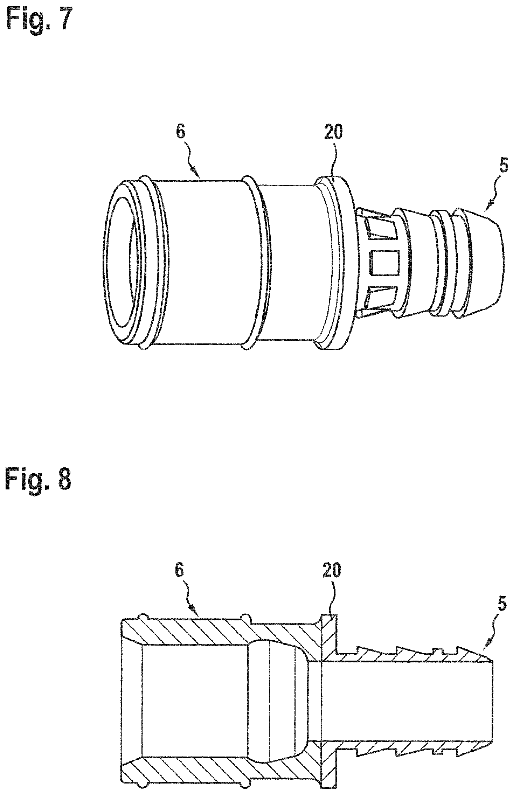

Die Figur 7 zeigt eine Darstellung des Fluidverbindungsadapters 3 nach dem Ausbilden des Schlauchtüllenaufnahmeelements 6 an dem Basiselement 20. Das Schlauchtüllenaufnahmeelement 6 und Anschlussstutzen 5 bestehen aus unterschiedlichen Materialien, sodass der Anschlussstutzen 5 starrer ist als das Schlauchtüllenaufnahmeelement 6 beziehungsweise umgekehrt das Schlauchtüllenaufnahmeelement 6 eine höhere Flexibilität aufweist als der Anschlussstutzen 5.

Die Figur 8 zeigt erneut den Fluidverbindungsadapter 3, diesmal in einer Längsschnittdarstellung. Es wird erneut auf die weiteren Ausführungen hingewiesen.

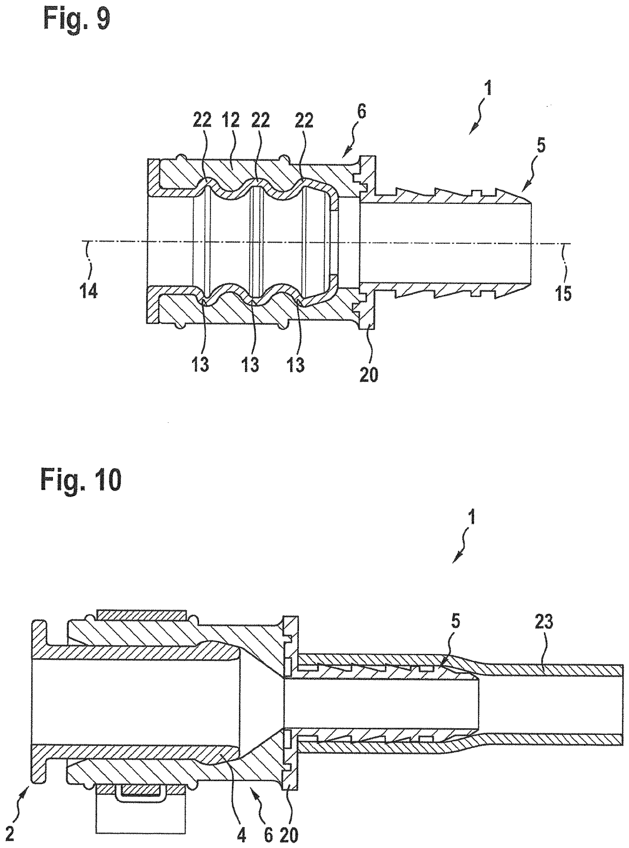

Die Figur 9 zeigt die Fluidverbindungsanordnung 1 in einer ersten Ausführungsvariante. Auf die vorstehenden Ausführungen wird Bezug genommen und nachfolgend lediglich auf die Unterschiede hingewiesen. Diese liegen darin, dass in der Wand 12 des Schlauchtüllenaufnahmeelements 6 nicht nur lediglich eine einzige Halteaufnahme 13 vorliegt, sondern vielmehr mehrere in axialer Richtung voneinander beabstandete Halteaufnahmen 13. Hierzu korrespondierend verfügt die Schlauchtülle 2 über mehrere Haltevorsprünge 22, von welchen eine in Form der vorstehend bereits erwähnten Olive 4 vorliegen kann. Mit einer derartigen Ausgestaltung wird eine besonders hervorragende Festigkeit der Verbindung zwischen dem Fluidverbindungsadapter 3 und der Schlauchtülle 2 erzielt.

Es ist erkennbar, dass wenigstens eine der Halteaufnahmen 13 in Überdeckung mit der Schlauchschellenaufnahme 17 ausgebildet ist. Hierdurch wird nach der Montage des Fluidverbindungsadapters 3 an der Schlauchtülle 2 auf vorteilhafte Art und Weise eine Klemmwirkung erzielt, die den Fluidverbindungsadapter 3 äußerst fest bezüglich der Schlauchtülle 2 festsetzt, weil ein Herausgelangen des jeweiligen Haltevorsprungs 22 aus der entsprechenden Halteaufnahme 13 zuverlässig unterbunden wird.

Die Figur 10 zeigt eine weitere Ausführungsvariante der Fluidverbindungsanordnung 1. Erneut wird auf die vorstehenden Ausführungen hingewiesen und lediglich auf die Unterschiede eingegangen. Diese liegen darin, dass das Aufweiten der Innenquerschnittsabmessungen der Schlauchtüllenaufnahme 11 in die von dem Anschlussstutzen 5 abgewandte Richtung stetig erfolgt und dies über eine vergleichsweise große Erstreckung. Zudem ist die Schlauchtüllenaufnahme 11 beziehungsweise das Schlauchtüllenaufnahmeelement 6 derart ausgestaltet, dass eine bei bestimmungsgemäßem Gebrauch des Fluidverbindungsadapters 3 die Schlauchtülle 2 beabstandet von dem Aufweiten der Innenquerschnittsabmessungen vorliegt. Eine maximale Einstecktiefe der Schlauchtülle 2 in den Fluidverbindungsadapter 3 ist insoweit entsprechend begrenzt. Rein beispielhaft ist hier zudem die Rohrleitung 23 dargestellt, die auf dem Anschlussstutzen 5 außenseitig aufsitzt.

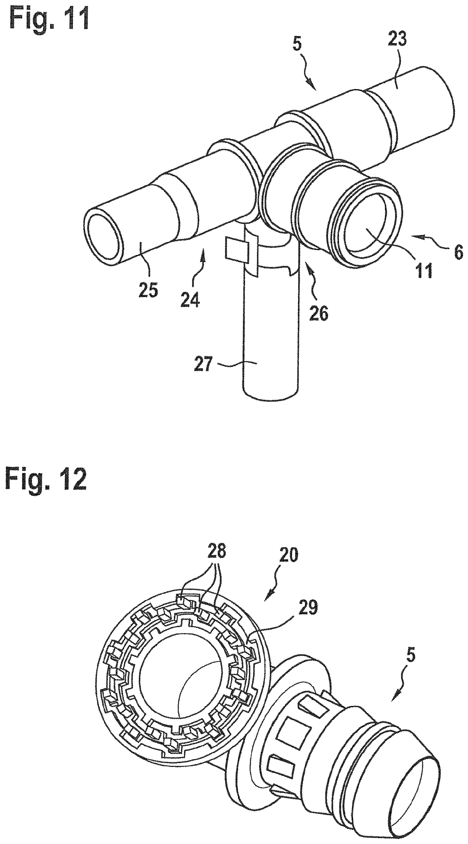

Die Figur 11 zeigt eine schematische Darstellung einer dritten Ausführungsvariante der Fluidverbindungsanordnung 1. Es wird wiederum auf die bisherigen Ausführungen Bezug genommen und lediglich auf die Unterschiede hingewiesen. Diese liegen darin, dass zusätzlich zu dem Anschlussstutzen 5 der Fluidverbindungsadapter 3 einen weiteren Anschlussstutzen 24 aufweist, welcher zur Verbindung des Fluidverbindungsadapters 3 mit einer weiteren Rohrleitung 25 vorgesehen und ausgebildet ist. Mittels des Fluidverbindungsadapters 3 können insoweit sowohl die Rohrleitung 23 als auch die weitere Rohrleitung 25 mit der Schlauchtülle 2 (hier nicht dargestellt) fluidtechnisch verbunden werden. Zusätzlich kann an dem Fluidverbindungsadapter 3 eine Schlauchtülle 26 optional vorliegen, welche zum Anschließen einer Schlauchleitung 27 vorgesehen und ausgebildet ist. Entsprechend kann mittels des Fluidverbindungsadapters 3 auch die Schlauchleitung 27 fluidtechnisch mit der Schlauchtülle 2 verbunden werden beziehungsweise verbunden sein.

Die Figur 12 zeigt eine schematische Darstellung des nicht erfindungsgemäßen Anschlussstutzens 5 und des Basiselements 20 mit einer ersten Befestigungskonfiguration zur Befestigung des Schlauchtüllenaufnahmeelements 6 an dem Basiselement 20. Im Rahmen dieser Befestigungskonfiguration gehen von dem Basiselement 20 mehrere Vorsprünge 28 aus, von welchen lediglich einige beispielhaft gekennzeichnet sind. Die Vorsprünge 28 greifen nach der Ausbildung des Schlauchtüllenaufnahmeelements 6 in dieses zur Verbesserung der Befestigung von Anschlussstutzen 5 und Schlauchtüllenaufnahmeelement 6 in das Schlauchtüllenaufnahmeelement 6 ein. Die Vorsprünge 28 greifen in eine Vertiefung 29 ein, die in dem Basiselement 20 ausgebildet ist. Die Vertiefung 29 verläuft in Umfangsrichtung mäanderförmig. Korrespondierend hierzu sind die Vorsprünge 28 in radialer Richtung versetzt zueinander angeordnet, sodass also ein Teil der Vorsprünge 28 eine erste Radialposition und ein zweiter Teil der Vorsprünge 28 eine zweite Radialposition aufweist, wobei die zweite Radialposition von der ersten Radialposition verschieden ist.

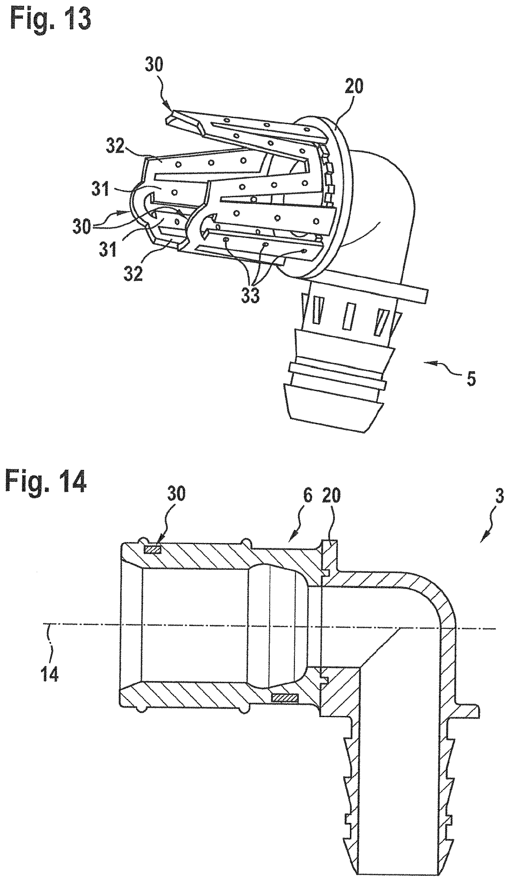

Die Figur 13 zeigt eine schematische Darstellung des erfindungsgemäßen Anschlussstutzens 5 und des Basiselements
20 mit einer zweiten Befestigungskonfiguration. In deren Rahmen sind zusätzlich oder alternativ zu den Vorsprüngen 28 andere Vorsprünge 30 vorgesehen, die von dem Basiselement 20 ausgehen und zum Eingreifen in das Schlauchtüllenaufnahmeelement 6 nach dessen Ausbilden angeordnet sind. In dem hier dargestellten Ausführungsbeispiel sind drei derartiger Vorsprünge 30 vorgesehen, welche in Umfangsrichtung gleichmäßig verteilt angeordnet sind. Jeder der Vorsprünge 30 besteht aus mehreren Stegen 31 und 32, wobei die Stege 31 von dem Basiselement 20 ausgehen. Die Stege 32 hingegen sind von dem Basiselement 20 beabstandet angeordnet. Auf ihrer dem Basiselement 20 abgewandten Seite sind die Stege 31 und Stege 32 jedes Vorsprungs 30 miteinander verbunden. Die Stege 32 jedes Vorsprungs 30 sind mit Stegen 32 eines anderen der Vorsprünge 30 verbunden, sodass über jeweils zwei der Stege 32 zwei der Vorsprünge 30 miteinander verbunden sind. Eine derartige Ausgestaltung der Vorsprünge 30 ermöglicht eine äußerst zuverlässige Verbindung des Schlauchtüllenaufnahmeelements 6 mit dem Anschlussstutzen 5 beziehungsweise dem Basiselement 20, wobei gleichzeitig eine hinreichende Flexibilität des Schlauchtüllenaufnahmeelements 6 sichergestellt ist.

Es ist erkennbar, dass in den Vorsprüngen 30 jeweils mehrere Ausnehmung 33 ausgebildet sind, welche in dem hier dargestellten Ausführungsbeispiel als Durchtrittsbohrungen vorliegen. Die Ausnehmungen 30 sind zur formschlüssigen Verbindung mit dem Schlauchtüllenaufnahmeelement 6 vorgesehen und ausgebildet. Das Anspritzen des Schlauchtüllenaufnahmeelements 6 erfolgt entsprechend derart, dass das Material des Schlauchtüllenaufnahmeelements 6 in die Ausnehmungen 3 eindringt, insbesondere diese vollständig durchsetzt.

Die Figur 14 zeigt eine schematische Schnittdarstellung des Fluidverbindungsadapters 3, wobei die Vorsprünge 30 angedeutet sind. Es wird deutlich, dass die Vorsprünge 30 in Richtung der Längsmittelachse 14 das Schlauchtüllenaufnahmeelement 6 in die von dem Basiselement 20 abgewandte Richtung größtenteils, insbesondere nahezu vollständig, durchsetzen. Beispielsweise durchgreifen die Vorsprünge 30 das Schlauchtüllenaufnahmeelement 6 in axialer Richtung zu mindestens 75 % oder mehr.

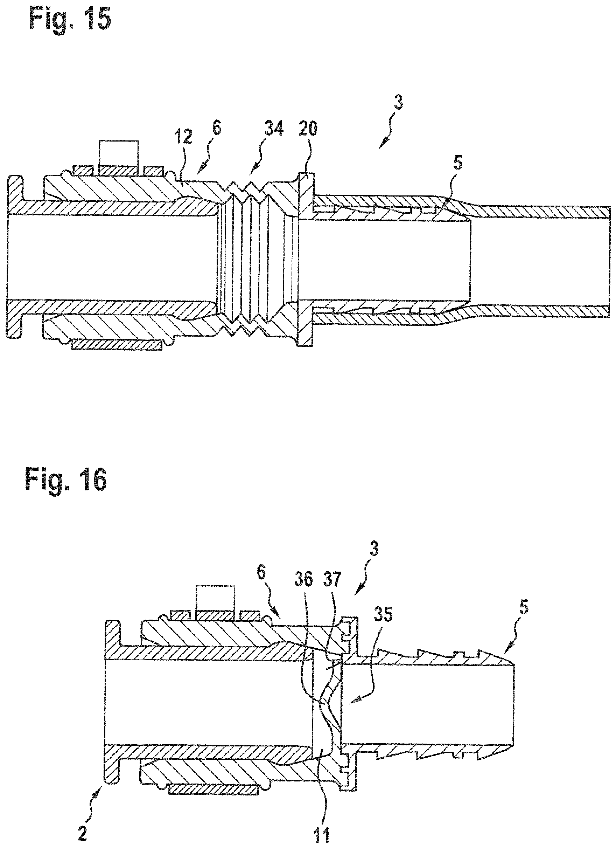

Die Figur 15 zeigt eine schematische Schnittdarstellung des Fluidverbindungsadapters 3. Das Schlauchtüllenaufnahmeelement 6 ist mit einem Dehnungsbereich 34 ausgebildet, in dem seine Flexibilität größer ist als in einem außerhalb des Dehnungsbereichs 34 liegenden Bereich. Beispielsweise ist der Dehnungsbereich 34, wie hier dargestellt, durch einen wellenförmigen Verlauf der Wand 12 umgesetzt. Zusätzlich oder alternativ kann die Wand 12 in dem Dehnungsbereich 34 eine geringere Wandstärke aufweisen als außerhalb des Dehnungsbereichs 34.

Es versteht sich von selbst, dass die vorstehend beschriebenen Varianten des Fluidverbindungsadapters 3 jeweils für sich Verwendung finden können oder aber auf vorteilhafte Weise miteinander kombiniert werden können. Die beschriebenen Ausführungsformen, Ausführungsvarianten und Befestigungskonfigurationen können insoweit beliebig untereinander kombiniert werden. Es sei insoweit ausdrücklich darauf hingewiesen, dass die anhand der einzelnen Figuren beschriebenen Ausführungsformen des Fluidverbindungsadapters 3 beziehungsweise der Fluidverbindungsanordnung 1 sowohl einzeln als auch in Kombination miteinander umgesetzt werden können.

Die Figur 16 zeigt eine schematische Längsschnittdarstellung des Fluidverbindungsadapters 3 mit darin angeordneter Schlauchtülle 2. Gezeigt ist die Integration eines Rückschlagventils 35 in den Fluidverbindungsadapter 3. Das Rückschlagventil 35 liegt hier in einer ersten Ausführungsform vor. Das Rückschlagventil 35 ist dazu vorgesehen und ausgebildet, eine Strömungsverbindung durch den Fluidverbindungsadapter 3 bei einer ersten Durchströmungsrichtung zu unterbrechen und bei einer der ersten Durchströmungsrichtung entgegengesetzten zweiten Durchströmungsrichtung freizugeben. Das Rückschlagventil 35 verfügt hierzu über ein Ventilelement 36, das zum Unterbrechen der Strömungsverbindung mit einem Ventilsitz 37 zusammenwirkt beziehungsweise zusammenwirken kann.

Das Ventilelement 36 ist von dem Schlauchtüllenaufnahmeelement 6 des Fluidverbindungsadapters 3 gebildet, insbesondere ist es einstückig und materialeinheitlich mit diesem ausgeführt. Das bedeutet, dass das Ventilelement 36 aus demselben elastischen Material besteht wie das Schlauchtüllenaufnahmeelement 6. Der Ventilsitz 37 wird von dem Anschlussstutzen 5 gebildet, nämlich von dessen Stirnseite. In einer hier dargestellten ersten Stellung des Ventilelements 36 liegt dieses derart an dem Ventilsitz 37 beziehungsweise an der Stirnseite des Anschlussstutzens 5 an, dass die Strömungsverbindung durch den Fluidverbindungsadapter 3 unterbrochen ist. In einer hier nicht dargestellten zweiten Stellung liegt das Ventilelement 36 hingegen beabstandet von dem Ventilsitz 37 vor, sodass die Strömungsverbindung freigegeben ist. In der zweiten Stellung ragt das Ventilelement 36 vorzugsweise in die in der Schlauchtüllenaufnahme 11 angeordnete Schlauchtülle 2 hinein. Dies ermöglicht eine besonders kompakte und platzsparende Ausgestaltung des Fluidverbindungsadapters 3.

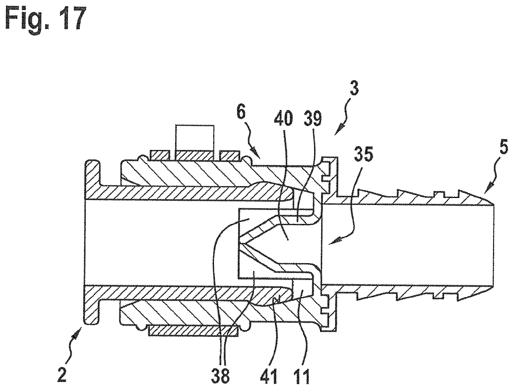

Die Figur 17 zeigt eine weitere schematische Längsschnittdarstellung des Fluidverbindungsadapters 3. Erneut ist das Rückschlagventil 35 ausgebildet, liegt hier jedoch in einer zweiten Ausführungsform vor. In dieser ist das Rückschlagventil 35 als Entenschnabelventil ausgebildet, welches wenigstens zwei Ventillippen 38 aufweist. In dem hier dargestellten Ausführungsbeispiel sind vier Ventillippen 38 vorgesehen, von welchen jedoch lediglich zwei zu erkennen sind. Die beiden dargestellten Ventillippen 38 liegen hinter der Schnittebene, die beiden nicht dargestellten Ventillippen 38 hingegen vor der Schnittebene. Die Ventillippen 38 sind vorzugsweise in axialer Richtung beabstandet von dem Anschlussstutzen 5 angeordnet. Hierzu gehen sie von einer Kanalwand 39 aus, die einen Strömungskanal 40 in radialer Richtung nach außen begrenzt. Vorzugsweise die Ventile 38 einstückig und materialeinheitlich mit der Kanalwand 39 ausgebildet, welche wiederum - besonders bevorzugt - einstückig und materialeinheitlich mit dem Schlauchtüllenaufnahmeelement 6 ausgestaltet ist.

Die Kanalwand 39 ist in radialer Richtung von einem Innenumfang 41 des Schlauchtüllenaufnahmeelements 6 beabstandet angeordnet, wobei der Innenumfang 41 die Schlauchtüllenaufnahme 6 in radialer Richtung nach außen begrenzt. Die Kanalwand 39 und mithin der Strömungskanal 40 sind derart angeordnet und ausgestaltet, dass nach einer Montage des Fluidverbindungsadapters 3 an der Schlauchtülle 2 die Schlauchtülle 2 zwischen die Kanalwand 39 und den Innenumfang 41 eingreift, mit diesen also in axialer Richtung in Überdeckung vorliegt. Hierdurch wird wiederum eine besonders kompakte Ausgestaltung des Fluidverbindungsadapters 3 erzielt.

Selbstverständlich kann das Rückschlagventil 35 gemäß der ersten Ausführungsform oder der zweiten Ausführungsform auf alle vorstehend beschriebenen Varianten des Fluidverbindungsadapters 3 angewandt werden. Die beschriebenen Ausführungsformen, Ausführungsvarianten und Befestigungskonfigurationen können beliebig mit den Ausführungsformen des Rückschlagventils 35 kombiniert werden.

Der Fluidverbindungsadapter 3 gemäß den Ausführungen im Rahmen dieser Beschreibung ermöglicht auf besonders einfache und effiziente Art und Weise die fluidtechnische Verbindung der Rohrleitung 23 mit der Schlauchtülle 2, nämlich ausschließlich mittels des Fluidverbindungsadapters 3 ohne weitere Anschluss- und/oder Verbindungselemente.

## Patentansprüche

1. Fluidverbindungsadapter (3), der zur fluidtechnischen Verbindung einer Rohrleitung (23) mit einer Schlauchtülle (2) einen starren Anschlussstutzen (5) zur Kopplung mit der Rohrleitung (23) sowie eine in einem flexiblen Schlauchtüllenaufnahmeelement (6) ausgebildete Schlauchtüllenaufnahme (11) zur Aufnahme der Schlauchtülle (2) aufweist, wobei der Anschlussstutzen (5) von einem Basiselement (20) ausgeht, das an dem Schlauchtüllenaufnahmeelement (6) befestigt ist und an dem wenigstens ein in das Schlauchtüllenaufnahmeelement (6) eingreifender erster Vorsprung (30) ausgebildet ist, **dadurch gekennzeichnet, dass** der erste Vorsprung (30) aus mehreren Stegen (31,32) besteht, die beabstandet voneinander an dem Basiselement (20) angreifen und auf ihrer dem Basiselement (20) abgewandten Seite aneinander befestigt sind, sodass zwischen den Stegen (31,32) wenigstens eine Öffnung vorliegt.

2. Fluidverbindungsadapter nach Anspruch 1, **dadurch gekennzeichnet, dass** der Anschlussstutzen (5) aus einem ersten Material und das Schlauchtüllenaufnahmeelement (6) aus einem von dem ersten Material verschiedenen zweiten Material besteht.

3. Fluidverbindungsadapter nach einem der vorhergehenden Ansprüche, **dadurch gekennzeichnet, dass** das Schlauchtüllenaufnahmeelement (6) auf seiner der Schlauchtüllenaufnahme (11) abgewandten Seite eine Schlauchschellenaufnahme (17) zur Aufnahme einer Schlauchschelle (18) aufweist.

4. Fluidverbindungsadapter nach einem der vorhergehenden Ansprüche, **dadurch gekennzeichnet, dass** die Schlauchtüllenaufnahme (11) Innenquerschnittsabmessungen aufweist, die sich ausgehend von Innenquerschnittsabmessungen des Anschlussstutzens (5) auf seiner dem Schlauchtüllenaufnahmeelement (6) zugewandten Seite in die von dem Anschlussstutzen (5) abgewandte Richtung vergrößern.

5. Fluidverbindungsadapter nach einem der vorhergehenden Ansprüche, **dadurch gekennzeichnet, dass** das Basiselement (20) ringförmig ist.

6. Fluidverbindungsadapter nach einem der vorhergehenden Ansprüche, **dadurch gekennzeichnet, dass** das Schlauchtüllenaufnahmeelement (6) und der Anschlussstutzen (5) koaxial angeordnet sind, oder dass das Schlauchtüllenaufnahmeelement (6) bezüglich des Anschlussstutzens (5) angewinkelt ist.

7. Fluidverbindungsadapter nach einem der vorhergehenden Ansprüche, **dadurch gekennzeichnet, dass** das Schlauchtüllenaufnahmeelement (6) mit dem Anschlussstutzen (5) formschlüssig und/oder stoffschlüssig verbunden ist.

8. Fluidverbindungsadapter nach einem der vorhergehenden Ansprüche, **dadurch gekennzeichnet, dass** an dem Basiselement (20) mehrere in das Schlauchtüllenaufnahmeelement (6) eingreifende zweite Vorsprünge (28) ausgebildet sind.

9. Fluidverbindungsadapter nach Anspruch 8, **dadurch gekennzeichnet, dass** die zweiten Vorsprünge (28) ringförmig bezüglich einer Längsmittelachse des Basiselements (20) angeordnet sind, und/oder dass die zweiten Vorsprünge (28) abwechselnd in radialer Richtung versetzt zueinander angeordnet sind.

10. Fluidverbindungsadapter nach einem der vorhergehenden Ansprüche, **dadurch gekennzeichnet, dass** das Schlauchtüllenaufnahmeelement (6) einen Dehnungsbereich (34) aufweist, in dem eine Flexibilität des Schlauchtüllenaufnahmeelements (6) größer ist als in einem außerhalb des Dehnungsbereichs (34) liegenden Bereich des Schlauchtüllenaufnahmeelements (6).

11. Fluidverbindungsadapter nach Anspruch 10, **dadurch gekennzeichnet, dass** die Wand (12) des Schlauchtüllenaufnahmeelements (6) in dem Dehnungsbereich (34) wellenförmig verläuft und/oder eine geringere Wandstärke aufweist als außerhalb des Dehnungsbereichs (34).

12. Fluidverbindungsadapter nach einem der vorhergehenden Ansprüche, **dadurch gekennzeichnet, dass** zusätzlich zu dem Anschlussstutzen (5) wenigstens ein weiterer Anschlussstutzen (24) zur Kopplung mit einer weiteren Rohrleitung (25) vorliegt.

13. Fluidverbindungsanordnung (1) mit einer Rohrleitung (23), einer Schlauchtülle (2) und einem Fluidverbindungsadapter (3) nach einem der vorhergehenden Ansprüche.

14. Verfahren zum Herstellen eines Fluidverbindungsadapters (3), wobei der Fluidverbindungsadapter (3) zur fluidtechnischen Verbindung einer Rohrleitung (23) mit einer Schlauchtülle (2) einen starren Anschlussstutzen (5) zur Kopplung mit der Rohrleitung (23) sowie eine in einem flexiblen Schlauchtüllenaufnahmeelement (6) ausgebildete Schlauchtüllenaufnahme (11) zur Aufnahme der Schlauchtülle (2) aufweist, wobei der Anschlussstutzen (5) von einem Basiselement (20) ausgeht, das an dem Schlauchtüllenaufnahmeelement (6) befestigt wird und an dem wenigstens ein in das Schlauchtüllenaufnahmeelement (6) eingreifender erster Vorsprung (30) ausgebildet wird, **dadurch gekennzeichnet, dass** der erste Vorsprung (30) aus mehreren Stegen (31,32) besteht, die beabstandet voneinander an dem Basiselement (20) angreifen und auf ihrer dem Basiselement (20) abgewandten Seite aneinander befestigt werden, sodass zwischen den Stegen (31,32) wenigstens eine Öffnung vorliegt.

## Claims

1. Fluid connection adapter (3) comprising, for the fluid connection of a pipe (23) to a hose nozzle (2), a rigid connecting piece (5) for coupling to the pipe (23) and a hose nozzle receptacle (11), formed in a flexible hose nozzle receiving element (6), for receiving the hose nozzle (2), wherein the connecting piece (5) extends from a base element (20), which is fastened to the hose nozzle receiving element (6) and on which at least one first projection (30) engaging in the hose nozzle receiving element (6) is formed, **characterized in that** the first projection (30) consists of a plurality of webs (31, 32), which adjoin the base element (20) at a distance from one another and are fastened to one another on their side facing away from the base element (20), so that at least one opening is present between the webs (31, 32).

2. Fluid connection adapter according to claim 1, **characterized in that** the connecting piece (5) consists of a first material and the hose nozzle receiving element (6) consists of a second material different from the first material.

3. Fluid connection adapter according to one of the preceding claims, **characterized in that** the hose nozzle receiving element (6) has, on its side facing away from the hose nozzle receptacle (11), a hose clamp receptacle (17) for receiving a hose clamp (18).

4. Fluid connection adapter according to one of the preceding claims, **characterized in that** the hose nozzle receptacle (11) has internal cross-sectional dimensions which, starting from internal cross-sectional dimensions of the connecting piece (5) on its side facing the hose nozzle receiving element (6), increase in the direction facing away from the connecting piece (5).

5. Fluid connection adapter according to any of the preceding claims, **characterized in that** the base element (20) is annular.

6. Fluid connection adapter according to one of the preceding claims, **characterized in that** the hose nozzle receiving element (6) and the connecting piece (5) are arranged coaxially, or that the hose nozzle receiving element (6) is angled with respect to the connecting piece (5).

7. Fluid connection adapter according to one of the preceding claims, **characterized in that** the hose nozzle receiving element (6) is connected to the connecting piece (5) in a form-fitting and/or firmly bonded manner.

8. Fluid connection adapter according to one of the preceding claims, **characterized in that** a plurality of second projections (28) engaging in the hose nozzle receiving element (6) are formed on the base element (20).

9. Fluid connection adapter according to claim 8, **characterized in that** the second projections (28) are arranged annularly with respect to a longitudinal central axis of the base element (20), and/or **in that** the second projections (28) are arranged alternately offset with respect to one another in the radial direction.

10. Fluid connection adapter according to any one of the preceding claims, **characterized in that** the hose nozzle receiving element (6) has an expansion region (34), in which a flexibility of the hose nozzle receiving element (6) is greater than in a region of the hose nozzle receiving element (6) lying outside the expansion region (34).

11. Fluid connection adapter according to claim 10, **characterized in that** the wall (12) of the hose nozzle receiving element (6) runs in an undulating manner in the expansion area (34) and/or has a smaller wall thickness than outside the expansion area (34).

12. Fluid connection adapter according to one of the preceding claims, **characterized in that**, in addition to the connecting piece (5), there is at least one further connecting piece (24) for coupling to a further pipe (25).

13. Fluid connection arrangement (1) comprising a pipe (23), a hose nozzle (2) and a fluid connection adapter (3) according to one of the preceding claims.

14. Method for producing a fluid connection adapter (3), wherein the fluid connection adapter (3) for fluid connection of a pipe (23) to a hose nozzle (2) comprises a rigid connecting piece (5) for coupling to the pipe (23) and a hose nozzle receptacle (11), formed in a flexible hose nozzle receiving element (6), for receiving the hose nozzle (2), wherein the connecting piece (5) extends from a base element (20), which is fastened to the hose nozzle receiving element (6) and on which at least one first projection (30) engaging in the hose nozzle receiving element (6) is formed, **characterized in that** the first projection (30) consists of a plurality of webs (31, 32), which adjoin the base element (20) at a distance from one another and are being fastened to one another on their side facing away from the base element (20), so that at least one opening is present between the webs (31, 32).

## Revendications

1. Adaptateur de liaison fluidique (3) qui, pour la liaison fluidique d'une conduite (23) avec une douille de tuyau (2), présente une tubulure de raccordement rigide (5) pour le couplage avec la conduite (23) ainsi qu'une réception de douille de tuyau (11) formé dans un élément de réception de douille de tuyau flexible (6) pour recevoir la douille de tuyau (2), la tubulure de raccordement (5) partant d'un élément de base (20), qui est fixé à l'élément de réception de douille de tuyau (6) et sur lequel est formée au moins une première saillie (30) s'engageant dans l'élément de réception de douille de tuyau (6), **caractérisé en ce que** la première saillie (30) est constituée de plusieurs barrettes (31, 32) qui s'appuient à distance les unes des autres sur l'élément de base (20) et qui sont fixées les unes aux autres sur leur côté opposé à l'élément de base (20), de sorte qu'il existe au moins une ouverture entre les barrettes (31, 32).

2. Adaptateur de liaison fluidique selon la revendication 1, **caractérisé en ce que** la tubulure de raccordement (5) est constituée d'un premier matériau et l'élément de réception de douille de tuyau (6) est constitué d'un deuxième matériau différent du premier matériau.

3. Adaptateur de liaison fluidique selon l'une des revendications précédentes, **caractérisé en ce que** l'élément de réception de douille de tuyau (6) présente, sur son côté opposé à la réception de douille de tuyau (11), une réception de collier de serrage (17) destiné à recevoir un collier de serrage (18).

4. Adaptateur de liaison fluidique selon l'une des revendications précédentes, **caractérisé en ce que** la réception de douille de tuyau (11) présente des dimensions de section transversale intérieure qui, en partant des dimensions de section transversale intérieure de la tubulure de raccordement (5) sur son côté tourné vers l'élément de réception de douille de tuyau (6), augmentent dans la direction opposée à la tubulure de raccordement (5).

5. Adaptateur de liaison fluidique selon l'une quelconque des revendications précédentes, **caractérisé en ce que** l'élément de base (20) est annulaire.

6. Adaptateur de liaison fluidique selon l'une des revendications précédentes, **caractérisé en ce que** l'élément de réception de douille de tuyau (6) et la tubulure de raccordement (5) sont coaxiaux, ou **en ce que** l'élément de réception de douille de tuyau (6) est incliné par rapport à la tubulure de raccordement (5).

7. Adaptateur de liaison fluidique selon l'une des revendications précédentes, **caractérisé en ce que** l'élément de réception de douille de tuyau (6) est relié à la tubulure de raccordement (5) par complémentarité de forme et/ou de matière.

8. Adaptateur de liaison fluidique selon l'une des revendications précédentes, **caractérisé en ce que** plusieurs deuxièmes saillies (28) s'engageant dans l'élément de réception de douille de tuyau (6) sont formées sur l'élément de base (20).

9. Adaptateur de liaison fluidique selon la revendication 8, **caractérisé en ce que** les deuxièmes saillies (28) sont disposées en forme d'anneau par rapport à un axe central longitudinal de l'élément de base (20), et/ou **en ce que** les deuxièmes saillies (28) sont disposées en alternance et décalées les unes par rapport aux autres dans la direction radiale.

10. Adaptateur de liaison fluidique selon l'une des revendications précédentes, **caractérisé en ce que** l'élément de réception de douille de tuyau (6) présente une zone d'extension (34) dans laquelle une flexibilité de l'élément de réception de douille de tuyau (6) est supérieure à celle d'une zone de l'élément de réception de douille de tuyau (6) située en dehors de la zone d'extension (34).

11. Adaptateur de liaison fluidique selon la revendication 10, **caractérisé en ce que** la paroi (12) de l'élément de réception de douille de tuyau (6) est ondulée dans la zone d'extension (34) et/ou présente une épaisseur de paroi plus faible qu'en dehors de la zone d'extension (34).

12. Adaptateur de liaison fluidique selon l'une des revendications précédentes, **caractérisé en ce que**, en plus de la tubulure de raccordement (5), il existe au moins une autre tubulure de raccordement (24) pour le couplage avec une autre conduite (25).

13. Ensemble de liaison fluidique (1) comprenant une conduite (23), une douille de tuyau (2) et un adaptateur de liaison fluidique (3) selon l'une des revendications précédentes.

14. Procédé de fabrication d'un adaptateur de liaison fluidique (3), l'adaptateur de liaison fluidique (3) présentant, pour la liaison fluidique d'une conduite (23) avec une douille de tuyau (2), une tubulure de raccordement rigide (5) pour le couplage avec la conduite (23) ainsi qu'une réception de douille de tuyau (11) formé dans un élément de réception de douille de tuyau flexible (6) pour recevoir la douille de tuyau (2), la tubulure de raccordement (5) partant d'un élément de base (20), qui est fixé à l'élément de réception de douille de tuyau (6) et sur lequel est formée au moins une première saillie (30) s'engageant dans l'élément de réception de douille de tuyau (6), **caractérisé en ce que** la première saillie (30) est constituée de plusieurs barrettes (31, 32) qui s'engagent à distance les unes des autres sur l'élément de base (20) et qui sont fixées les unes aux autres sur leur côté opposé à l'élément de base (20), de sorte qu'il existe au moins une ouverture entre les barrettes (31, 32).
